Europäisches Patentamt

European Patent Office

Office européen des brevets

(19)

(11) Numéro de publication: **0 300 876 B1**

## (12) FASCICULE DE BREVET EUROPEEN

(45) Date de publication de fascicule du brevet: **30.09.92**　(51) Int. Cl.5: **H04L 12/54**

(21) Numéro de dépôt: **88401797.1**

(22) Date de dépôt: **08.07.88**

(54) **Système de commutation de multiplex temporels hybrides à mémoire tampon optimisée.**

(30) Priorité: **24.07.87 FR 8710034**

(43) Date de publication de la demande:
**25.01.89 Bulletin 89/04**

(45) Mention de la délivrance du brevet:
**30.09.92 Bulletin 92/40**

(84) Etats contractants désignés:
**AT BE CH DE ES GB IT LI NL SE**

(56) Documents cités:
**EP-A- 0 113 639**
**EP-A- 0 126 196**
**FR-A- 2 513 472**
**FR-A- 2 526 613**
**FR-A- 2 549 673**

**INTERNATIONAL SWITCHING SYMPOSIUM,
15-20 mars 1987, pages 974-978, Phoenix, US;
P. BOYER et al.: "Time transparency evaluation of an asynchronous time-division network"**

(73) Titulaire: **FRANCE TELECOM**
**6 place d'Alleray**
**F-75015 Paris(FR)**

(72) Inventeur: **Servel, Michel**
**1e Rhu en Servel**
**F-22300 Lannion(FR)**
Inventeur: **Gonet, Patrick**
**Kerninon**
**F-22660 Trelevern(FR)**
Inventeur: **Francois, Joel**
**Prat Cotel Bihan Saint Ouay-Perros**
**F-22700 Perros-Guirec(FR)**

(74) Mandataire: **Cabinet Martinet & Lapoux**
**BP 405**
**F-78055 Saint Ouentin en Yvelines**
**Cédex(FR)**

Rank Xerox (UK) Business Services

**Description**

La présente invention concerne un système de commutation de blocs de données encre plusieurs multiplex à division du temps entrants et plusieurs multiplex à division du temps sortants.

Les blocs dans chacun des multiplex peuvent être des blocs synchrones en mode-circuit et/ou des blocs asynchrones en mode-paquet, et ont une longueur constante. Les blocs synchrones d'une même communication sont transmis périodiquement, à une fréquence de trame des multiplex. Des blocs asynchrones d'un même communication sont transmis sporadiquement dans les multiples. Ces blocs résultent d'une "paquetisation" préalable d'octets aussi bien pour les communications en mode-circuit que pour les communicat's en mode-paquet.

En entrée d'un tel système de commutation, les blocs de données dans les multiplex entrants sont détectés et sont multiplexés dans un supermultiplex entrant. La commutation est indépendante du contenu de l'information proprement dite dans les blocs.

Lorsque les multiplex ne convoient que des blocs synchrones ou que des blocs asynchrones comme décrit dans le brevet FR-B-2538976 correspondant à la EP-A-0113307, les blocs détectés et multiplexés sont écrits dans une unique mémoire tampon au fur et à mesure de leur arrivée, et sont lus en fonction des rangs des intervalles de temps dans les multiplex sortants destinataires et/ou des rangs des multiplex sortants destinataires vers lesquels sont acheminés les blocs respectivement.

Lorsque les multiplex convoient à la fois des blocs synchrones et des blocs asynchrones, comme décrit dans la FR-A-2 611 411 déposée le 27 février 1987 et publiée le 2 Septembre 1988, aussi bien les blocs synchrones que les blocs asynchrones dans le supermultiplex sont écrits dans des première et seconde mémoires tampons au fur et à mesure de leur arrivée. Le choix entre blocs synchrones et blocs asynchrones est réalisé en lecture. Les blocs synchrones sont lus dans la première mémoire tampon en fonction des intervalles de temps périodiques destinataires dans les multiplex sortants à occuper, et les blocs asynchrones sont lus dans la seconde mémoire tampon en fonction des intervalles de temps restants non occupés par des blocs synchrones dans les multiplex sortants.

Quels que soient les systèmes de commutation connus précédents adresses des cellules de mémoire tampon où doivent être écrits des blocs détectés sont fournies cycliquement par une base de temps, comme pour une mémoire tampon dans un système de commutation temporel MIC. Ainsi, par exemple, pour trois blocs de données détectés espacés respectivement de deux blocs vides de données, dits blocs ou créneaux blancs, et de cinq blocs vides dans le supermultiplex entrant, le premier bloc de données est écrit dans une cellule de mémoire tampon ayant une adresse $k$, où $k$ est un nombre entier compris entre 1 et le nombre de cellules de bloc de la mémoire tampon, le second bloc de données est écrit dans une cellule d'adresse $k + 3$, et le troisième bloc de données est écrit dans une cellule d'adresse $k + 9$. Des cellules intermédiaires ayant des adresses $k + 1$, $k + 2$, et $k + 4$ à $k + 8$ demeurent inoccupées et ne peuvent être occupées au cycle d'adressage suivant que si des blocs de données sont fournis par le supermultiplex entrant en même temps que ces cellules sont adressées en écriture respectivement.

Cet adressage cyclique en écriture d'une mémoire tampon présente essentiellement les inconvénients suivants.

Sachant que les blocs de données à écrire sont répartis sporadiquement, le nombre de cellules inoccupées dans la mémoire tampon est relativement grand en moyenne. Pour un système qui commute uniquement des blocs asynchrones, la capacité de la mémoire tampon ne dépend pas du débit moyen de blocs détectés fournis par le supermultiplex, mais du plus grand débit moyen des blocs dans les multiplex entrants et sortants, afin de perdre, le cas échéant, un minimum de blocs de données. Pour un système hybride commutant des blocs synchrones et asynchrones, la capacité de chacune des deux mémoires tampon est au moins égale au produit du nombre d'intervalle de temps dans une trame de multiplex et du nombre de multiplex entrants ou sortants, c'est-à-dire au moins égal au nombre d'intervalle de temps dans une trame du supermultiplex, afin de permettre l'écriture périodique des blocs synchrones d'une même communication.

En outre, dans un tel système de commutation hybride, le nombre moyen de cellules inoccupées est multiplié par deux en raison de l'utilisation de deux mémoires tampons.

Par suite, le coût du système de commutation dépend directement de la mémoire tampon, et donc de la capacité de celle-ci.

Un second type de système de commutation hybride dans lequel les blocs de données sont des mots, tels qu'octets, multiplexés dans des voies MIC, et qui met en oeuvre qu'une seule mémoire tampon pour les blocs synchrones et asynchrones, est décrit dans la FR-A-2526613.

Au sens de cette demande de brevet, un bloc de mémoire tampon est destiné à mémoriser des octets de plusieurs communications en mode-circuit, ou bien à mémoriser un paquet ou une partie de paquet chaîné dans plusieurs blocs de mémoire tampon pour une même communication en mode-paquet. Le chaînage des octets multiplexés appartenant à un même paquet nécessite de maintenir occupé au moins un bloc de mémoire tampon qui n'est que partiellement occupé pendant la transmission du paquet d'une part, et de mémoriser les octets du paquet dans des blocs de mémoire tampon consécutifs lorsque le paquet a une longueur excédant celle d'un bloc de mémoire. La réduction de la taille de la mémoire tampon visée par cette demande de brevet n'est donc pas optimisée.

Selon la FR-A-2526613, les moyens d'adressage en écriture pour écrire les blocs de données entrants comprennent une mémoire d'état de bloc de mémoire tampon ayant des cellules à 1 bit chacune et une file FIFO des numéros des blocs de mémoire tampon libres. Ces numéros constituent des adresses de bloc de mémoire libre dont la première entrée dans la file sert à adresser en écriture le bloc de mémoire correspondant pour écrire un octet en mode-circuit ou un premier octet d'information de paquet dans la mémoire tampon en réponse au début du paquet, l'état occupé du bloc mémorisé étant alors écrit dans la mémoire d'état de blocs. L'adresse d'un bloc de mémoire et l'état libre de ce bloc sont écrits respectivement dans la file et dans la mémoire d'état de bloc lorsque l'octet en mode-circuit ou le dernier octet d'information du paquet est lu dans la mémoire tampon.

Il apparaît que, selon la FR-A-2526613, la file d'adresses doit avoir une capacité égale $2^N$ X N bits où $2^N$ désigne le nombre de blocs de mémoire tampon et N le nombre de bits dans les adresses des blocs, d'une part, et la mémoire d'état de bloc de mémoire tampon ne coopère pas avec la file et donc n'intervient pas dans la sélection d'une adresse de bloc de mémoire libre, d'autre part.

La présente invention vise à réduire la capacité de la mémoire tampon et de la mémoire contribuant à l'adressage en écriture de la mémoire tampon, dans un système de commutation de blocs de données, notamment du type asynchrone ou hybride. Accessoirement, cette réduction permet d'intégrer les mémoires avec des moyens d'entrée multiplexant les blocs des multiplex entrants et des moyens de sortie démultiplexant les blocs lus en mémoire tampon et transmis dans les multiplex sortants.

A cette fin, selon l'invention, un système de commutation de blocs de données entre plusieurs multiplex entrants et plusieurs multiplex sortants est tel que défini dans la revendication 1.

Ainsi, selon l'invention, une cellule de mémoire tampon dans laquelle doit être écrit un bloc de données n'est pas adressée en écriture cycliquement, mais est choisie parmi des cellules de mémoire qui sont libres à l'instant d'écriture du bloc. Cette sélection est effectuée grâce a un calcul d'adresse en fonction des états dans des cellules à 1 bit d'une mémoire d'état et non parmi un ensemble d'adresses d'écriture de cellules libres de mémoire tampon. Ceci réduit la taille file FIFO selon la FR-A-2 526 613 à la taille $2^N$ de la mémoire à cellules d'état. Les moyens pour établir surveillent en permanence l'état occupé ou libre de toutes les cellules de mémoire tampon afin d'offrir en permanence une adresse de cellule libre pour un bloc à écrire. L'adresse de cellule libre est remplacée par une adresse d'une autre cellule libré qui est établir après l'écriture du bloc. La cellule maintenant occupée par le bloc écrit est ensuite libérée lors de la première lecture du bloc pour une communication point-à-point, ou lors de la dernière lecture du bloc pour une communication multipoint. La cellule libérée peut être immédiatement réutilisée pour l'écriture d'un autre bloc entrant, sans attendre, qu'une base de temps produise l'adresse de la cellule libérée après un cycle complet d'adressage de la mémoire tampon.

Dans ces conditions, la capacité de la mémoire tampon et de la mémoire à cellules d'état dépend directement du débit moyen des blocs de données dans le supermultiplex entrant. En référence à l'exemple évoqué précédemment, si les cellules ayant les adresses k à k + 9 sont sélectionnées par ordre croissant des adresses, les cellules ayant les adresses k, k + 1 et k + 2 mémorisent lesdits premier, second et troisième blocs de données détectés, et si parmi les cellules d'adresse 1 à k + 1, seules les cellules ayant les adresses k et k + 1 sont libérées avant qu'un quatrième bloc de données soit fourni par le supermultiplex entrant, ce quatrième bloc est écrit dans la cellule ayant l'adresse k.

Selon un aspect de l'invention, un système de commutation est conçu pour commuter des blocs de données relatifs également à des communications multipoint. Pour une communication multipoint, un bloc de données doit être lu autant de fois qu'il y a de multiplex sortants destinataires devant recevoir le bloc de données. La cellule de mémoire tampon dans laquelle est écrit le bloc de données, doit être libérée lors de la dernière lecture du bloc, c'est-à-dire après nbm lectures, où nbm désigne le nombre de multiplex sortants destinataires.

A cette fin, les moyens d'adressage en écriture comprennent des moyens pour indiquer les nombres de multiplex sortants vers lesquels doivent être encore transmis des blocs de données mémorisés dans des cellules des moyens tampons, respectivement, ledit nombre relatif à une cellule mémorisant un bloc étant égal à un nombre prédéterminé de multiplex sortants destinataires du bloc lorsque le bloc est écrit dans la cellule et étant décrémenté d'une unité en réponse à chaque adresse de lecture de ladite cellule fournie par les moyens d'adressage en lecture, la libération de ladite cellule ayant mémorisée ledit bloc étant signalée par les moyens pour indiquer aux moyens pour sélectionner dès que ledit nombre atteint zéro.

Selon une réalisation préférée décrite en détail dans la suite de la description, un système de commutation est du type hybride et comprend, comme selon la demande de brevet précitée FR-A-2611411,

des moyens d'entrée pour détecter des blocs de données dans les trames des multiplex entrants et multiplexer les blocs détectés,

des premiers moyens tampons pour mémoriser tous les blocs multiplexés dans des premières cellules de blocs,

des seconds moyens tampons pour mémoriser tous les blocs multiplexés dans des secondes cellules de blocs,

des moyens de sortie pour démultiplexer des blocs synchrones et asynchrones mémorisés et les transmettre en fonction de leurs destinations aux multiplex sortants, de manière à constituer les trames dans les multiplex sortants,

des moyens d'écriture pour produire des adresses de cellules de bloc afin d'écrire chacun des blocs détectés multiplexés dans des première et seconde cellules,

des premiers moyens de lecture recevant les adresses des premières cellules dans lesquelles sont écrits des blocs synchrones pour lire chacun des blocs synchrones mémorisés, par correspondance entre l'adresse de la première cellule où est écrit le bloc synchrone et au moins un numéro d'intervalle de multiplex sortant à occuper par le bloc synchrone, et

plusieurs seconds moyens de lecture, du genre file d'attente (FIFO), respectivement assignés aux multiplex sortants et adressés par les moyens d'écriture, et recevant les adresses des secondes cellules dans lesquelles sont écrits des blocs asynchrones pour lire chacun des blocs asynchrones mémorisés, par correspondance entre l'adresse de la seconde cellule où est écrit le bloc asynchrone et le numéro du multiplex sortant destinataire.

Selon l'invention, ce système de commutation hybride est tel que caractérisé dans la revendication 3.

Il apparaît ainsi qu'un système de commutation hybride selon l'invention comprend une mémoire tampon ayant une capacité inférieure à la moitié de l'ensemble des deux mémoires tampons selon la FR-A-2611411. Cela permet de réduire considérablement le coût du système de commutation.

Le coût est d'autant plus réduit que l'unique mémoire tampon et la mémoire à cellules d'état peuvent être intégrée notamment avec des matrices de rotation d'entrée et de sortie incluses respectivement dans les moyens d'entrée et de sortie. On rappelle que de telles matrices de rotation effectuant des permutations simultanées d'octets de blocs offrent l'avantage par rapport à des moyens de multiplexage et démultiplexage classiques à conversions série-parallèle et parallèle-série, de traiter des blocs de données de multiplex ayant des débits très élevés, notamment pour des vidéocommunications.

La réduction de la capacité de la mémoire tampon et de la mémoire à cellules d'état résoud également des problèmes de surcharge d'interconnexions à l'intérieur du système, et du fait de l'intégration, permet d'optimiser les vitesses de fonctionnement concernant notamment l'écriture et la lecture des cellules de la mémoire tampon.

D'autres avantages et caractéristiques de l'invention apparaîtront plus clairement à la lecture de la description suivante d'un système de commutation hybride selon l'invention, en référence aux dessins annexés correspondants dans lesquels :

- la Fig. 1 montre une trame hybride dans un multiplex entrant ou sortant;
- la Fig. 2 est un bloc-diagramme du système de commutation hybride ;
- la Fig. 3 est un bloc-diagramme détaillé d'un circuit de commande et d'adressage en lecture de mémoire tampon, et d'un circuit de commande de transfert de blocs lus, tous deux inclus dans le système hybride;
- la Fig. 4 montre en détail un premier circuit de commande de transfert relatif à des premiers octets de blocs lus et interconnecté entre la mémoire tampon et une matrice de rotation de sortie dans le système hybride ;
- la Fig. 5 montre en détail un autre circuit de transfert ; et
- la Fig. 6 est un bloc-diagramme détaillé d'un circuit à mémoire à cellules d'état pour la gestion de mémoire tampon et l'adressage en écriture inclus dans le système hybride.

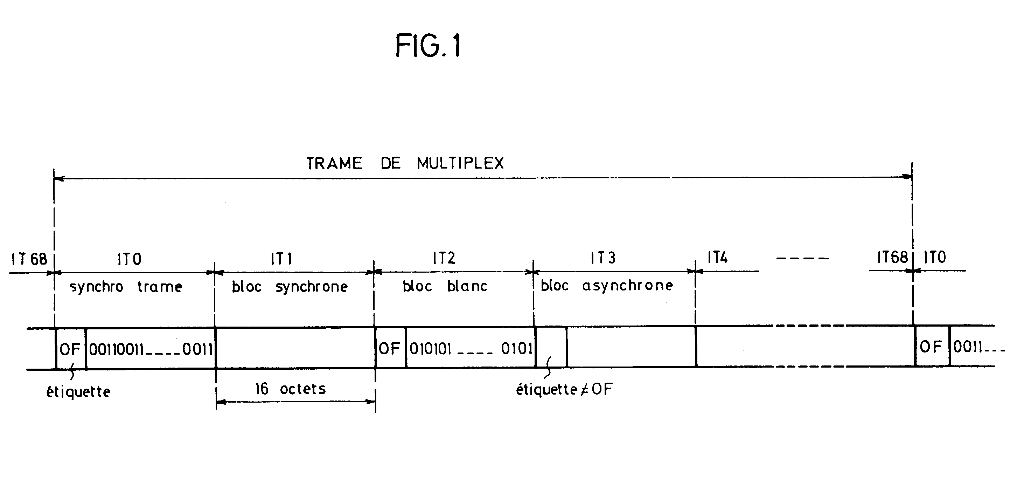

Un multiplex temporel entrant ou sortant dans le système de commutation selon l'invention a une structure de trame telle que celle montrée à la Fig. 1, à laquelle on se référera dans la suite de la description. Le multiplex convoie des blocs à 16 octets occupant des intervalles de temps consécutifs. Par exemple, lorsque le multiplex a un débit de 280 Mbit/s, un bloc d'octets est transmis pendant 0,457 $\mu$s, correspondant à une période d'octet égale à 28,57 ns.

En pratique, la trame du multiplex est hybride, c'est-à-dire comprend à la fois des blocs de données synchrones provenant de voies de transmission en mode-circuit convoyant de la parole par exemple, et des blocs de données asynchrones provenant de voies de transmission en mode-paquet. Par définition, les blocs synchrones occupent des intervalles de temps de rangs prédéterminés dans la trame, tels que le second intervalle IT1, tandis que les blocs asynchrones, dits blocs de paquet, occupent, d'une manière pratiquement sporadique, les autres intervalles de temps, tels que les intervalles IT2, IT3, dans la trame. En outre, plusieurs blocs asynchrones d'une même communication ou message à retransmettre dans un ou plusieurs multiplex sortants peuvent être contenus dans une même trame, pour les uns consécutivement, pour les autres espacés temporellement. Il en résulte que certains blocs asynchrones dans une trame peuvent être vides de données et seront appelés dans la suite "blocs blancs". Les blocs blancs ont cependant un motif prédéterminé de bits qui ne peut être imité dans les blocs de paquet afin de servir à une synchronisation des paquets.

Selon la structure de trame illustrée à la Fig. 1, une trame contient 69 blocs à 16 octets occupant des intervalles de temps IT0 à IT68; cependant tout autre dimensionnement de la trame, avec un nombre de blocs tel que 64, 65,...72, pouvant être différent d'une puissance de 2 est possible. Un premier intervalle IT0 dans la trame contient un bloc de synchronisation de trame, dit également bloc ou mot d'alignement ou de verrouillage de trame, ayant le motif suivant : 0000111100110011...00110011. On peut en outre n'affecter qu'une partie de ce premier intervalle IT0, par exemple la moitié, au motif de verrouillage 000011110011...0011, et l'autre partie peut être affectée à d'autres informations. Un bloc blanc, dit bloc de synchronisation de paquet, tel que celui de l'intervalle IT2, a le motif suivant 0000111101010101...01010101, dans lequel le premier octet est identique à celui du bloc de synchronisation de trame correspondant à "0F" en code hexadécimal et constitue une étiquette de synchronisation suivie de paires de bits de bourrage "01". Un bloc asynchrone, tel que celui dans l'intervalle IT3, contient un premier octet formant une étiquette du bloc et 15 octets d'information. L'étiquette d'un bloc asynchrone constitue un identificateur d'une communication de paquets dans lequel un nombre de bits prédéterminé sont affectés à l'identification de multiplex et à l'identification de voies de transmission sortant du système de commutation et éventuellement d'autres systèmes de commutation secondaires ultérieurs. Ainsi, les blocs asynchrones d'une même communication ont une même étiquette spécifique qui sera substituée à une autre étiquette lors de la commutation dans le système de commutation, en vue de l'acheminement du bloc vers un autre système de commutation principal ou secondaire.

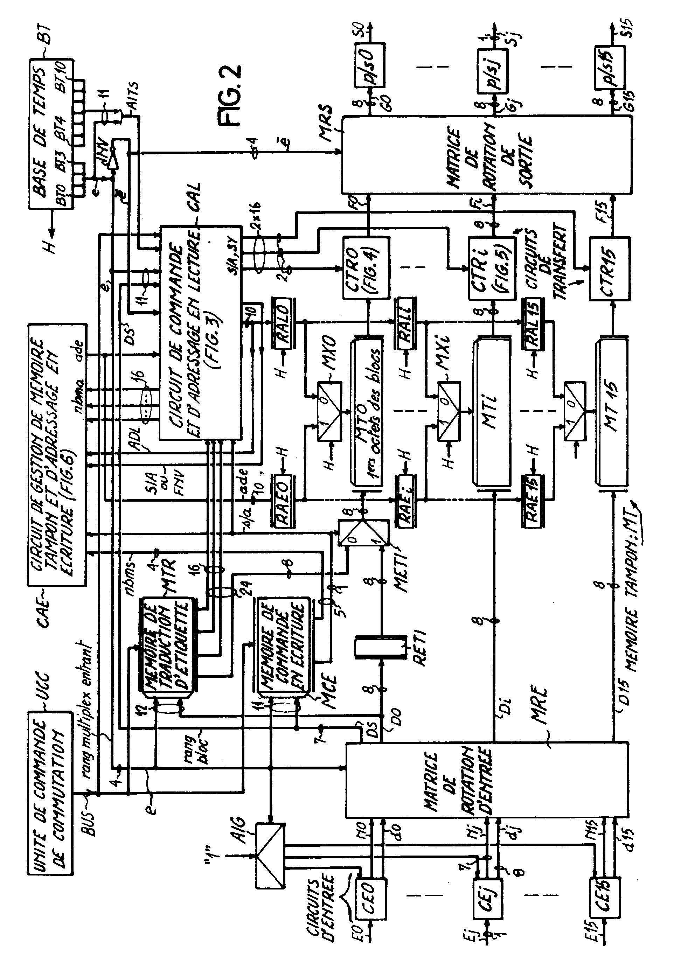

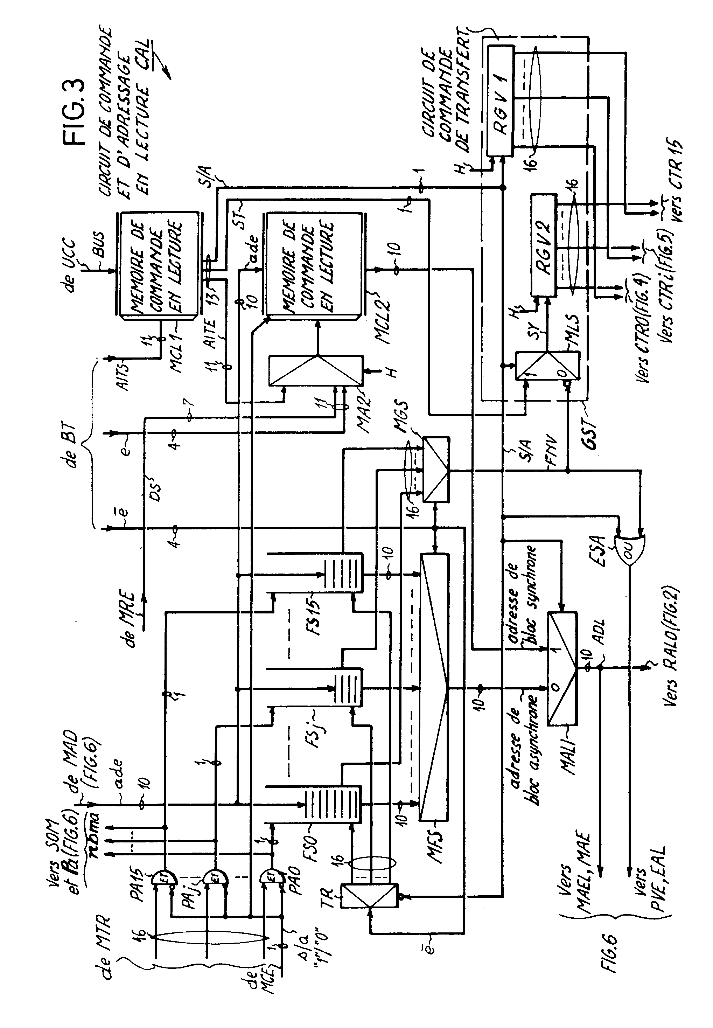

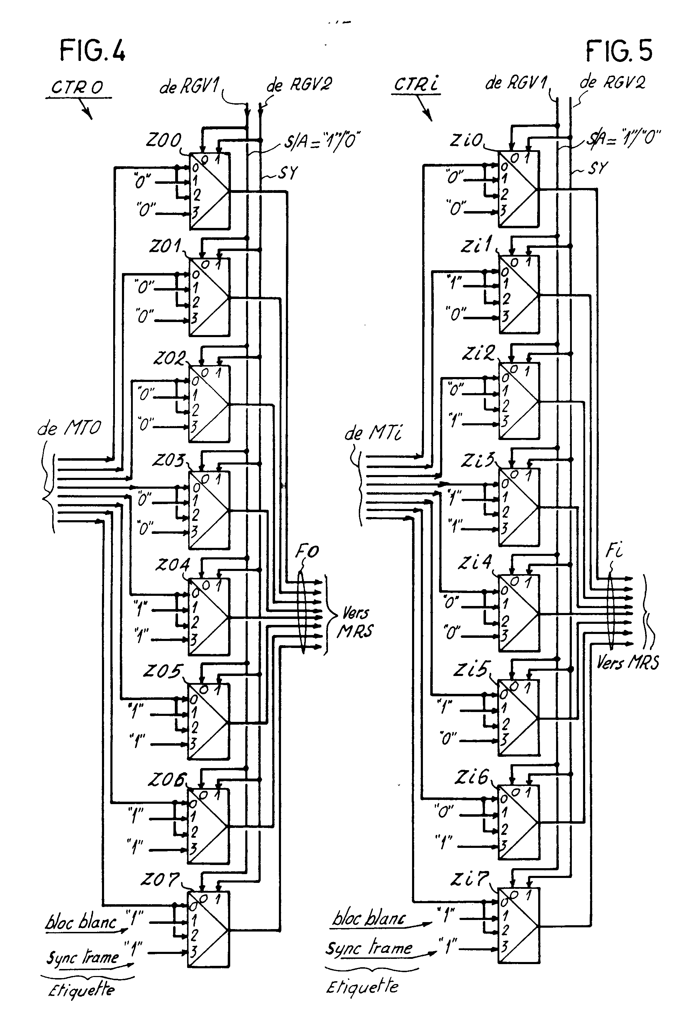

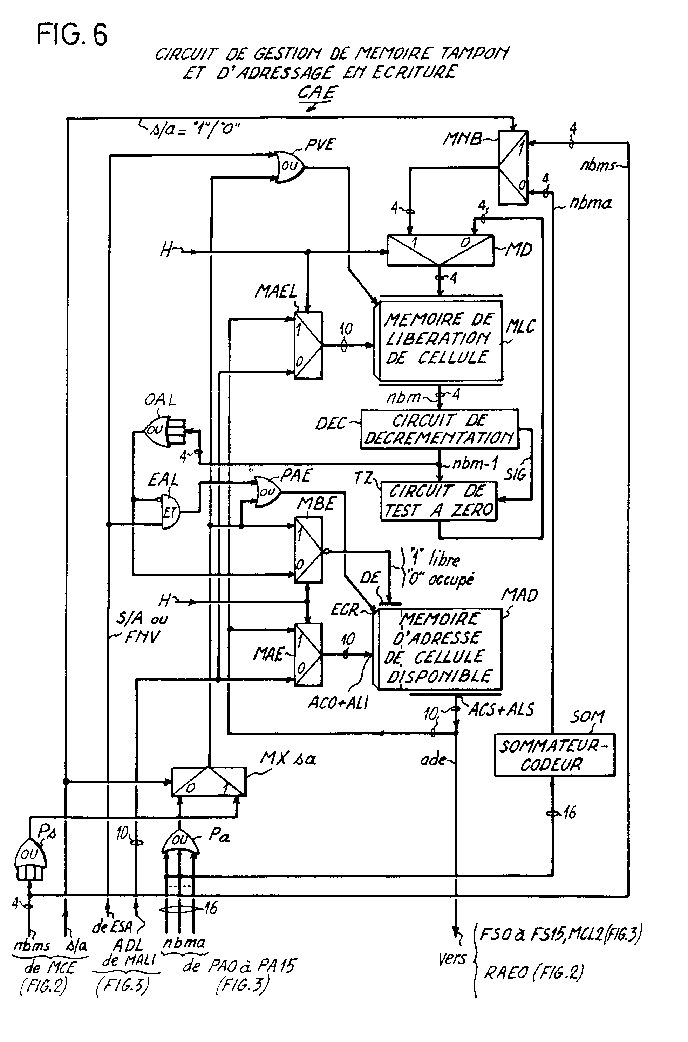

Comme montré à la Fig. 2, le système de commutation hybride est destiné à commuter des blocs de données provenant de seize multiplex entrants E0 à E15 vers seize multiplex sortants S0 à S15. Le système comprend essentiellement en entrée d'une mémoire tampon centrale MT, 16 circuits d'entrée CE0 à CE15 et une matrice de rotation d'entrée MRE, en sortie de la mémoire tampon MT, 16 circuits de transfert CTR0 à CTR15, une matrice de rotation de sortie MRS et 16 convertisseurs parallèle- série p/s0 à p/s15 d'une part, et des moyens assurant l'écriture et la lecture des paquets dans la mémoire tampon selon les communications demandées, tels qu'une mémoire de commande en écriture MCE, une mémoire de traduction d'étiquette MTR, un circuit de commande et d'adressage en lecture CAL, et un circuit de gestion de mémoire tampon et d'adressage en écriture CAE, d'autre part.

Le système de commutation comprend également une base de temps BT incluant une horloge locale à une fréquence multiple entière du débit des multiplex. En particulier, la base de temps BT comporte des diviseurs de fréquence et des compteurs pour produire par une première sortie un signal d'horloge H à la fréquence d'octet dans les multiplex ; par quatre sorties BT0 à BT3 des mots d'adresse de multiplex à 4 bits $e$ toutes les 16 périodes du signal H et, à travers un circuit inverseur INV, un mot $\bar{e}$ complémentaire de $e$ ; et par les sorties BT0 à BT3 et sept autres sorties BT4 à BT10 un mot d'adresse d'intervalle de temps sortant à 11 bits AITS. Les mots $e$ et AITS sont transmis à la fréquence d'octet H. La base de temps opère sur un cycle de trame de 69 x 16 = 1104 intervalles de temps correspondant au multiplexage de 16 multiplex, à raison de 69 intervalles de temps entrants ou blocs par multiplex et par période de trame afin de constituer des adresses de lecture d'une première mémoire de commande de lecture MCL1 qui est destinée à commander en lecture des blocs de données écrits dans la mémoire tampon, comme on le verra dans la suite. Les mots $e$ et $\bar{e}$ varient successivement de 0 à 15 et de 15 à 0 et constituent des adresses des multiplex entrants et sortants, respectivement. Les mots AITS varient de 0 à 1103.

Les circuits d'entrée CE0 à CE15 ont pour rôle essentiel de synchroniser les trames dans les multiplex entrants E0 à E15 en vue de leur multiplexage synchrone. En effet, les étiquettes dans des blocs de données des multiplex entrants ne sont pas a priori appliquées simultanément en entrée des circuits CE0 à CE15. Cette synchronisation est complétée par celle des blocs asynchrones, c'est-à-dire par le cadrage de ceux-ci suite aux détections sporadiques des blocs blancs. En outre, les circuits CE0 à CE15 sont destinés à produire les numéros de rang à 7 bits des blocs dans chacune des trames de chaque multiplex entrant par détection des blocs de synchronisation de trame, et à extraire des trames les blocs blancs qui ne sont pas transmis en sortie des circuits d'entrée.

Chacun des circuits d'entrée CE0 à CE15 est analogue à celui décrit et montré à la Fig. 4 dans la demande de brevet 87-02892 déjà citée. Un circuit d'entrée comprend principalement un circuit de contrôle de trame et de synchronisation montré à la Fig. 5 de la demande précitée pour signaler le début de chaque bloc, indiquer les rangs de bloc dans les trames et récupérer une fréquence d'octet, et un convertisseur série-parallèle, une file d'attente FIFO et un circuit logique d'adressage de la file décrits en détail dans le FR-B-2538976, ou la EP-A-0113307. Ainsi, chaque circuit d'entrée CE0 à CE15 comprend une file d'attente de mots à 8 + 7 + 1 = 16 bits parallèles qui sont constitués chacun par un octet de données, un numéro de rang de paquet lorsque l'octet est un premier octet de paquet, et d'un bit d'indication de début de bloc.

Les octets de données et les rangs de paquet sont transmis par les circuits CE0 à CE15 à la matrice MRE à travers des bus à 8 fils d0 à d15 et des bus à 7 fils N0 à N15, respectivement. Cependant, comme selon la FR-A-2611411, ou selon la Fig. 5 du FR-B-2538976, les octets ayant un même rang dans des trames des bus d0 à d15 sont délivrés séquentiellement au rythme de l'horloge d'octet H; en particulier, ce décalage résultant d'une conversion parallèle-diagonale, dite conversion "paragonale", impose que les étiquettes sont décalées d'un bus d0 à d15 au bus suivant d1 à d15, d0, d'une durée égale à la période d'octet. Ce décalage est assuré grâce à un circuit d'aiguillage AIG, tel qu'un démultiplexeur à entrée à l'état "1", qui reçoit les mots e fournis par la base de temps BT et établit des signaux ayant la fréquence des blocs et retardés successivement d'une période d'octet.

Les matrices de rotation MRE et MRS ont un rôle analogue à celles décrites dans la FR-A-2611411, ou le FR-B-2538976. Les matrices de rotation MRE et MRS ont des entrées de commande de rotation auxquelles sont appliquées les mots e et $\bar{\bar{e}}$ variant cycliquement de 0 à 15 et de 15 à 0 et qui identifient implicitement les rangs des multiplex entrants et sortants, respectivement.

Dans la matrice MRE, la rotation s'effectue sur 8 + 7 = 15 bits afin de transmettre d'une part, par un premier bus de sortie DS à sept fils les rangs de bloc en synchronisme avec les premiers octets des blocs multiplexés qui sont transmis par un second bus D0 à huit fils, d'autre part, les 16 octets de chaque bloc dans seize bus à huit fils D0 à D15 constituant un supermultiplex entrant desservant la mémoire tampon. Si i désigne le rang d'un octet dans un bloc de paquet, et j le rang d'un multiplex entrant, où i et j sont des entiers compris entre 0 et 15, alors l'octet de rang i d'un bloc délivré par le bus dj est transmis par le bus Di et succède à l'octet de rang i-1 dans ce même bloc et transmis par le bus de sortie D(i-1), après une période d'octet du signal H. Tous les octets de rang i dans des blocs de même rang dans des trames des bus d0 à d15 décalées temporellement, sont transmis par le bus Di, l'octet du bus dj succédant à l'octet du bus d(j-1). Comme on le verra dans la suite, la matrice de rotation de sortie effectue l'opération inverse afin de "dédiagonaliser" les blocs sortant de la mémoire tampon.

La mémoire tampon MT comprend seize sous-mémoires tampons MT0 à MT15. Le bus D0 est relié à huit premières entrées d'un multiplexeur d'étiquette METI à travers un registre d'étiquette à 8 étages parallèles RETI. Huit sorties du multiplexeur METI appliquent des premiers octets à des entrées de données de la première sous-mémoire tampon MT0. Les premiers octets mémorisés sont des premiers octets de blocs synchrones provenant directement du bus D0 et des nouvelles étiquettes de blocs asynchrones lues dans la mémoire de traduction MTR. Le registre RETI compense la durée de traduction d'étiquette lorsqu'un bloc synchrone est à écrire dans la mémoire tampon MT. Les autres bus de sortie D1 à D15 de la matrice MRE sont reliées directement à des entrées de données des sous-mémoires MT1 à MT15 respectivement.

Comme cela apparaît dans la Fig. 2, à chacune des sous-mémoires MT0 à MT15 sont associés un registre d'adresse d'écriture RAE0 à RAE15, un registre d'adresse de lecture RAL0 à RAL15, et un multiplexeur d'adresse MX0 à MX15 relié aux sorties des deux registres et transmettant au rythme de l'horloge H des adresses d'écriture et de lecture à la sous-mémoire. Les registres RAE0 à RAE15 sont connectés en cascade à un bus d'adresse d'écriture de cellule libre ade sortant du circuit CAE. Cependant, afin de préserver le retard dû au registre RETI, l'écriture des deux premiers octets de chaque bloc est simultanée si bien que la sortie du registre RAE0 est reliée directement à l'entrée du registre RAE2, le registre RAE1 n'existant pas. De même, les registres RAL0 à RAL15 sont connectés en cascade à un bus d'adresse de lecture de bloc ADL sortant du circuit CAL. Tous les registres précédents reçoivent le signal d'octet H afin d'écrire ou de lire les octets d'un même bloc de donnée pendant seize périodes d'octet successives, conformément au décalage "paragonal" des octets de bloc dans les bus D0 à D15 du supermultiplex entrant. Les adressages en écriture et lecture des sous-mémoires sont déduits de la même façon en dépendance d'une adresse d'écriture ade et d'une adresse de lecture ADL, respectivement. Ainsi, bien que les blocs entrants dans la mémoire tampon soient présentés sous forme diagonale, ils sont néanmoins écrits sous forme spatialement orthogonale dans les sous-mémoires.

Les sous-mémoires tampons MT0 à MT15 mémorisent respectivement les seize octets d'un bloc de donnés. Comme la sélection d'une sous-cellule à un octet dans chacune des sous-mémoires, c'est-à-dire d'une cellule à seize sous-cellules dans la mémoire MT est dynamique, et qu'une cellule venant d'être libérée peut être réutilisée immédiatement pour écrire un autre bloc entrant, il suffit de dimensionner à 64 blocs par trame et par multiplex la mémoire MT pour obtenir une très faible probabilité de perte de blocs dû à un sous-dimensionnement de la mémoire MT. Ainsi, chacune des sous-mémoires MT0 à MT15 contient 64 x 16 = 1024 cellules d'un octet, nombre sensiblement inférieur au nombre de blocs par trame égal à 1104.

Les huit sorties de donnée de chacune des sous-mémoires tampons MT0 à MT15 sont reliés à un bus d'entrée à huit fils respectifs F0 à F15 de la matrice de rotation de sortie MRS à travers les circuits de transfert respectifs CTR0 à CTR15. Les circuits de transfert sont reliés chacun à deux fils de sortie du circuit CAL transmettant des signaux S/A et SY destinés à introduire dans les multiplex sortant des blocs de synchronisation de trame et des blocs blancs. Des bus de sortie à huit fils G0 à G15 de la matrice MRS transmettent des blocs de données à destination des multiplex S0 à S15 à travers les convertisseurs parallèle-série p/s0 à p/s15 respectivement. Les blocs de données dans les différents bus G0 à G15 ont des étiquettes décalées d'une période d'octet d'un bus au suivant, comme dans les bus d'entrée d0 à d15.

On décrit maintenant successivement les moyens de commande en écriture des blocs et étiquettes MCE + MTR et le circuit CAL dont les structures, bien que sensiblement analogues à celles décrites dans la FR-A-2611411, diffèrent notamment au niveau des liaisons et fonctions interdépendantes avec le circuit de gestion de mémoire tampon et d'adressage en écriture CAE, caractérisant principalement l'invention.

Comme illustré également dans la Fig. 2, une unité de commande de commutation UCC est reliée par un bus BUS à des entrées de donnée et d'adressage en écriture des mémoires MCE et MTR et de la première mémoire MCL1 incluse dans le circuit CAL. L'unité de commande de commutation UCC supervise les communications en mode circuit et en mode paquet traversant le système de commutation, en fonction de blocs de signalisation détectés dans les multiplex entrants et repérés par des étiquettes spécifiques. En fonction de nouvelles communications à établir ou de communications à libérer, l'unité UCC modifie le contenu des trois mémoires MTR, MCE et MCL1. Les mémoires MCE et MCL1 ainsi qu'une seconde mémoire MCL2 incluse dans le circuit CAL sont des mémoires vives RAM et contiennent chacune un nombre de cellules adressables au moins égal au nombre de blocs de données par trame dans les multiplex, soit au moins 69 x 16 = 1104 cellules. D'autre part, la mémoire MTR contient autant de cellules que de circuits virtuels adressables par les diverses étiquettes, soit pour seize multiplex et une étiquette à huit bits, $16 \times 2^8$ = 4096 cellules. Chacune des cellules des mémoires MCE, MTR et MCL1 contient 4 + 1 = 5 bits, 16 + 8 = 24 bits, 11 + 2 = 13 bits respectivement.

La mémoire de commande en écriture MCE est adressée en lecture par des adresses à 11 bits comprenant chacune une première partie à 4 bits formée par un mot e identifiant le rang d'un multiplex entrant et délivré par la base de temps BT, et une seconde partie à 7 bits formée par le rang d'un bloc dans une trame du multiplex entrant et délivré par le bus DS de la matrice MRE. Chaque cellule dans la mémoire MCE contient un bit s/a indiquant si le bloc à écrire en mémoire tampon est affecté à une communication synchrone (s) pour laquelle s/a = "1", ou à une communication asynchrone (a) pour laquelle s/a = "0", ainsi que quatre bits significatifs indiquant le nombre en code binaire nbms de multiplex sortants S0 à S15 dans lesquels doit être diffusé le bloc à écrire lorsque la communication est synchrone. Il est à noter que réciproquement, des blocs provenant de plusieurs multiplex entrants E0 à E15 peuvent être transmis dans un même multiplex sortant, selon les principes d'une communication multipoint. Ainsi, par exemple si un bloc synchrone doit être diffusé vers trois multiplex sortants tels que les multiplex S1, S4 et S9, le nombre nbms indique la valeur 3 = "0011".

Les bits parallèles du nombre nbms lu dans la mémoire MCE sont appliqués aux quatre entrées d'une porte OU Ps dont la sortie est reliée à une première entrée d'un multiplexeur MXsa, et à quatre premières entrées d'un multiplexeur MNB, les éléments Ps, MXsa et MNB étant inclus dans le circuit CAE montré à la Fig. 6. Le bit s/a est appliquée d'une part, à une entrée de sélection du multiplexeur METI afin de transmettre une nouvelle étiquette de bloc asynchrone lue dans la mémoire MTR lorsque s/a = "0", d'autre part, à une entrée de commande en écriture d'une seconde mémoire de commande de lecture MCL2 et à des entrées inverseuses de commande de seize portes ET à deux entrées PA0 à PA15 incluses dans le circuit CAL (Fig. 3), et à des entrées de sélection des multiplexeurs MXsa et MNB dans le circuit CAE (Fig. 6).

La mémoire de traduction MTR est chargée d'une nouvelle étiquette à affecter aux blocs asynchrones d'une communication par l'unité UCC, lors de l'établissement de cette communication. Cette nouvelle étiquette est lue par une adresse à 12 bits comprenant une première partie à 4 bits formée par un mot e identifiant le rang du multiplex entrant convoyant les blocs de cette communication asynchrone, et une seconde partie à 8 bits constituée par l'étiquette de ces blocs transmis par le bus D0 sortant de la matrice de rotation d'entrée MRE. En pratique, chaque cellule de la mémoire MTR comprend une nouvelle étiquette à 8 bits à appliquer aux secondes entrées du multiplexeur METI pour insertion en en-tête dans les blocs de la communication, et un mot à 16 bits qui ne comprend qu'un ou plusieurs bits à l'état haut "1" dont les rangs dans le mot à 16 bits correspondent aux rangs des multiplex sortants S0 à S15 auxquels sont destinés les blocs de la communication asynchrone. Les bits des mots à 16 bits sont appliqués respectivement à des secondes entrées des portes PA0 à PA15 (Fig. 3).

En se référant maintenant à la Fig. 3, dans le circuit de commande et d'adressage en lecture CAL, contient seize files d'attente FIF0 FS0 à FS15, un démultiplexeur TR de validation de lecture des files, les seize portes PA0 à PA15 pour autoriser sélectivement des écritures dans les files, la première mémoire de commande de lecture MCL1, un multiplexeur MFS pour les adresses lues dans les files d'attente, un multiplexeur MGS pour sélectionner une file vide, ainsi qu'un circuit de commande de transfert GST qui comprend un multiplexeur à deux entrées MLS et deux registres à décalage à 16 étages RGV1 et RGV2 pour lire des blocs de synchronisation de trame et des blocs blancs dans les circuits de transfert CTR0 à CTR15. Tous les circuits énoncés précédemment ont des fonctions analogues à ceux montrés à la Fig. 2 dans la demande de brevet français 87-02892. Cependant, le circuit CAL comprend en outre une seconde mémoire de commande en lecture MCL2, un multiplexeur d'adresses MA2 pour la mémoire MCL2, et un multiplexeur d'adresse de lecture de bloc MALI.

La première mémoire de commande en lecture MCL1 contient au moins 16 x 69 = 1104 cellules à 13 bits utilisables qui sont lues cycliquement à chaque période de trame en réponse aux mots à 11 bits AITS fournis par la base de temps. Chaque mot AITS identifie d'une part le rang d'un multiplex sortant S0 à S15 correspondant au mot e, d'autre part par 7 autres bits le rang d'un intervalle de temps à occuper par un bloc dans le multiplex sortant. Chacune des cellules dans la mémoire MCL1 contient un mot à 11 bits AITE identifiant le rang à 4 bits du multiplex entrant et le rang à 7 bits de l'intervalle de temps dans ce multiplex qui est occupé par un bloc entrant dont le premier octet devra être lu dans la sous-mémoire tampon MT0 à l'instant correspondant à l'adressage en lecture de la cellule par le mot correspondant AITS. En d'autres termes, la mémoire MCL1 fait correspondre, pour chaque période de trame, l'adresse AITS d'un intervalle de temps d'un multiplex sortant, c'est-à-dire une adresse d'octet dans un bus sortant F0 à F15 de l'une des sous-mémoires tampons MT0 à MT15, à l'adresse AITE d'un intervalle de temps d'un multiplex entrant, c'est-à-dire l'adresse d'un octet entrant dans un bus entrant D0 à D15 de l'une des sous-mémoires tampons, cet octet entrant devant être lu lors de l'adressage de l'intervalle de temps du multiplex sortant. Comme déjà dit, la mémoire MCL1 est reliée par le bus BUS à l'unité de commande de commutation UCC afin d'écrire les adresses des intervalles de temps entrants en fonction de ces différentes correspondances entre les intervalles de temps entrants et sortants, et donc en dépendance des acheminements des communications détectées lors de l'établissement des communications. Les adresses des intervalles de temps entrants AITE lues sont appliquées à des premières entrées du multiplexeur MA2.

Avec chaque adresse d'intervalle de temps entrant AITE sont écrits également dans la cellule correspondante de la mémoire MCL1, un bit S/A indiquant le type synchrone, S/A = "1", ou asynchrone, S/A = "0", du bloc contenu dans l'intervalle de temps entrant, et un bit de validation de synchronisation ST qui est à l'état "1" uniquement lorsque l'adresse de lecture associée AITS correspond à un bloc de synchronisation de trame de multiplex sortant. Ainsi, seize cellules de la mémoire MCL1 contiennent un bit ST à l'état "1", les autres cellules de la mémoire MCL1 contenant un bit ST à l'état "0". Les bits de bloc sortant S/A lus dans la mémoire MCL1 sont successivement appliqués à une entrée d'inhibition du démultiplexeur TR, à une entrée de sélection du multiplexeur MALI, à une entrée de sélection du multiplexeur MLS, à une entrée série du registre à décalage RGV1 et à une première entrée d'une porte OU à deux entrées ESA. Une sortie de la porte ESA est reliée à des premières entrées d'une porte OU PVE et d'une porte ET EAL incluses dans le circuit CAE (Fig. 6). Les bits ST lus dans la mémoire MCL1 sont successivement appliqués à une entrée directe de donnée du multiplexeur MLS.

La seconde mémoire de commande en lecture MCL2 comprend également au moins 1104 cellules. Chaque cellule de la mémoire MCL2 contient un mot à 10 bits identifiant une adresse ade d'une cellule dans les sous-mémoires tampons MT0 à MT15 où est écrit un bloc entrant. Les adresses ade sont transmises à la mémoire MCL2, tout comme au registre d'adresse d'écriture RAE0 (Fig. 2), par une mémoire d'adresse de cellule disponible MAD incluse dans le circuit CAE (Fig. 6). La mémoire MCL2 est adressée par le multiplexeur MA2, d'une part en écriture à chaque première demi-période d'octet par une adresse de bloc entrant à 11 bits transmise à la fois par la liaison e de la base de temps BT et le bus DS sortant de la mémoire de rotation MRE, comme l'adressage en lecture de la mémoire MCE (Fig. 2), d'autre part en lecture à chaque seconde demi-période d'octet par une adresse d'intervalle de temps entrant AITE lue dans la mémoire MCL1. Il est à noter que les adresses d'écriture e + DS appliquées au multiplexeur MA2 constituent des adresses d'intervalle de temps entrant mais qui sont ordonnées en permanence selon l'ordre cyclique et constant du multiplexage temporel des intervalles entrants dans la matrice MRE, tandis que les adresses AITE lues dans la mémoire MCL1 dépendent des commutations à réaliser et sont complètement désordonnées.

Ainsi, la mémoire MCL2 assure une conversion d'adresse, c'est-à-dire une correspondance entre le rang d'un intervalle de temps entrant dans la trame des multiplex D0 à D15 et l'adresse de la cellule de la mémoire tampon MT où est écrit le bloc entrant occupant l'intervalle de temps entrant. En effet, puisque selon l'invention, les cellules de la mémoire tampon ne sont pas assignées à des intervalles de temps entrants prédéterminés, ou respectivement aux multiplex entrants, il est nécessaire, lors de l'écriture d'un bloc notamment synchrone, de mémoriser l'adresse ade de la cellule de mémoire tampon mémorisant ce bloc entrant. Ainsi, cette adresse ade est écrite dans la mémoire MCL2 en réponse au rang e + DS du bloc entrant, et est lue dans la mémoire MCL2 en réponse au rang de l'intervalle de temps sortant AITE qui doit être occupé par le bloc entrant, rang qui déclenche la lecture de rang AITE du bloc entrant dans la mémoire MCL1. En pratique, la mémorisation des adresses de cellule de mémoire tampon dans la mémoire MCL2 ne sert qu'aux blocs synchrones, et est validée par les bits s/a = "1" délivrés par la mémoire MCE (Fig. 2) et appliqués à une entrée de validation d'écriture de la mémoire MCL2. Les adresses de lecture de cellule de mémoire tampon pour les blocs entrants asynchrones sont gérées par les files d'attente FS0 à FS15, comme décrit dans la demande 87-02892 et rappelé ci-après.

Les files d'attente FS0 à FS15 sont du type FIF0 ("First-In, First-Out") et ont des entrées de données reliées au bus de sortie à 10 fils de la mémoire d'adresse de cellule disponible MAD délivrant les adresses d'écriture de cellule ade. Des entrées de commande d'écriture des files FS0 à FS15 sont reliées respectivement à des sorties des portes d'adressage PA0 à PA15, tandis que des entrées de commande en lecture des files d'attente sont reliées respectivement aux seize sorties du demultiplexeur TR qui reçoit les mots e de la base de temps BT, via le circuit inverseur INV. Des bus sortants à 10 fils des files FS0 à FS15 sont appliqués à des entrées du multiplexeur MFS et sont sélectionnées par les mots $\bar{e}$ reçus à l'entrée de sélection du multiplexeur MFS. Le bus de sortie à 10 fils de la mémoire MCL2 et le bus de sortie à 10 fils du multiplexeur MFS sont reliés respectivement à des premières et secondes entrées du multiplexeur d'adresse de lecture de cellule MALI et sont sélectionnés par les bits S/A lus dans la mémoire MCL1. Le bus de sortie du multiplexeur MALI délivrant des adresses de lecture ADL de cellules de mémoire tampon est relié aux entrées du premier registre d'adresse de lecture RAL0 (Fig. 2) ainsi qu'à des secondes entrées de deux multiplexeurs d'adresses MAEL et MAE inclus dans le circuit CAE (Fig. 6). Des sorties d'état vide des files d'attente FS0 à FS15 sont reliées respectivement à seize entrées du multiplexeur MGS et sont sélectionnées par les mots $\bar{e}$ appliqués à quatre entrées de sélection du multiplexeur MGS. La sortie du multiplexeur MGS fournit un bit FNV à l'état "1" correspondant à une file non vide sélectionnée par les mots $\bar{e}$. Le bit FNV est transmis à une seconde entrée de la porte OU ESA et à une entrée inverseuse de donnée du multiplexeur MLS. La sortie du multiplexeur MLS est reliée à l'entrée série du second registre à décalage RGV2.

Les fonctionnements en écriture et lecture des files d'attente FS0 à FS15 sont analogues à ceux décrits dans le FR-B-2538976, et plus précisément dans la FR-A-2611411. La file d'attente FSj est assignée au multiplex sortant Sj afin d'enregistrer les adresses ade des cellules de la mémoire tampon MT dans lesquels des blocs asynchrones sont écrits et destinés au multiplex Sj, et afin de lire ces adresses, à raison d'une adresse toutes les seize périodes d'octet en moyenne, pour lire les blocs écrits tant que la file d'attente contient au moins une adresse. Comme déjà dit, sachant que la mémoire MCL2 est en fait utilisée pour la lecture des blocs synchrones, les écriture et lecture d'une file d'attente ne sont autorisées que lorsque le bit correspondant s/a appliqués aux entrées inverseuses des portes ET PA0 à PA15 et le bit correspondant S/A appliqué à l'entrée d'inhibition du démultiplexeur TR et à l'entrée de sélection du multiplexeur MALI sont respectivement à l'état bas "0". En écriture, la file FSj enregistre une nouvelle adresse ade lorsque le bit de rang j dans le mot à 16 bits fourni par la mémoire de traduction MTR, simultanément avec la nouvelle étiquette du bloc asynchrone à écrire, est à l'état "1" ce qui ouvre la porte ET PAj parmi les portes PA0 à PA15. Puis l'adresse ade de la cellule où a été écrit le bloc asynchrone, est lue dans la file FSj en réponse à un mot $\bar{e}$ égal à j en code binaire traduit par un "1" seulement à la sortie du démultiplexeur TR reliée à l'entrée de lecture de la file FSj. Le cycle d'adressage en lecture des files dépend des mots complémentaires $\bar{e}$, correspondant à des adresses décroissantes de 15 à 0 des multiplex sortants afin de permettre la "dédiagonalisation" dans la matrice de rotation de sortie MRE, dont le principe est illustré aux Figs. 6 et 7 du FR-B-2538976. Selon le nombre d'adresses de cellule contenues dans la file FSj, l'adresse du bloc asynchrone qui vient d'être écrit sera lu pratiquement immédiatement ou en différé. L'adresse de cellule lue est alors transmise aux secondes entrées du registre MALI pour effectuer la lecture du bloc proprement dite.

Il est à noter que les adresses ade écrites dans les files d'attente ne sont pas fournies cycliquement

9

par la base de temps BT, comme dans la FR-A-2611411, mais par le circuit de gestion de mémoire tampon et d'adressage en écriture CAE en vue d'optimiser la durée de mémorisation des blocs dans la mémoire tampon.

Le multiplexeur MGS sonde toutes les seize périodes d'octet, l'état des files d'attente FS0 à FS15 afin d'insérer un bloc blanc dans les multiplex sortants S0 à S15 lorsque les files correspondantes sont vides, à l'exception des intervalles de temps correspondant à l'insertion des blocs de synchronisation sortants signalés par les bits ST = "1". Les différentes insertions de blocs blancs et de synchronisation sont effectuées dans les circuits de transfert CTR0 à CTR15 sous la commande du circuit GST.

Comme montré à la Fig. 4, le circuit de transfert CTR0 comprend huit multiplexeurs Z00 à Z07 ayant des premières et troisièmes entrées de données parallèles recevant respectivement les bits de rang 0 à 7 des premiers octets des blocs sortant de la sous-mémoire tampon MT0. De même, chacun des autres circuits de transfert CTR1 à CTR15, tels que le circuit CTRi montré à la Fig. 5 pour i variant de 1 à 15, comprend huit multiplexeurs parallèles Zi0 à Zi7 ayant des premières et troisièmes entrées de données recevant respectivement les bits de rang de 0 à 7 des octets de rang i des blocs sortant de la sous-mémoire tampon MTi. Des secondes et quatrièmes entrées de donnée des multiplexeurs inclus dans les circuits de transfert CTR0 à CTR15 sont reliées à deux mémoires mortes, du type mémoire câblée, ayant enregistré les motifs d'un bloc blanc et d'un bloc de synchronisation de trame, respectivement. Ainsi, dans le circuit de transfert CTR0, les secondes et quatrièmes entrées des multiplexeurs Z00 à Z03 sont à l'état "0", et les secondes et quatrièmes entrées des multiplexeurs Z04 à Z07 sont à l'état "1" conformément à l'étiquette des blocs blancs et de synchronisation "00001111". Dans les autres circuits de transfert, tels que le circuit CTRi, les secondes entrées des multiplexeurs Zi0, Zi2, Zi4 et Zi6 sont à l'état "0" et les secondes entrées des multiplexeurs Zi1, Zi3, Zi5 et Zi7 sont à l'état "1" conformément aux octets de bourrage d'un bloc blanc "01010101", tandis que les quatrièmes entrées des multiplexeurs Zi0, Zi1, Zi4 et Zi5 sont à l'état "0", et les quatrièmes entrées des multiplexeurs Zi2, Zi3, Zi6 et Zi7 sont à l'état "1" conformément aux octets de synchronisation "00110011".

Comme montré à la Fig. 3, les registres RGV1 et RGV2 inclus dans le circuit de commande de transfert GST reçoivent respectivement les bits S/A, et des bits de synchronisation SY, ces derniers étant produits par le multiplexeur MLS. Les seize sorties parallèles du registre RGV1 sont reliées respectivement à des premières entrées de sélection des multiplexeurs dans les circuits de transfert CTR0 à CTR15, et les seize sorties parallèles du registre RGV2 sont reliées respectivement à des secondes entrées de sélection des multiplexeurs dans les circuits CTR0 à CTR15. Les bits S/A et SY sont décalés dans les registres RGV1 et RGV2 d'un étage en réponse à une impulsion d'horloge d'octet H, afin qu'un couple de bits S/A et SY commande les transferts successifs des seize octets d'un bloc pendant seize périodes d'octet H vers les bus d'entrée à 8 fils F0 à F15 de la matrice MRS.

Les transferts des quatre types de blocs, à savoir des blocs "asynchrones" tels que blocs en mode-paquet et blocs blancs, et des blocs "synchrones" tels que des blocs en mode-circuit et blocs de synchronisation, sont régis selon le tableau I suivant :

TABLEAU I

| | FNV | ST | multiplexeurs Z entrées | sélections | |
|---|---|---|---|---|---|
| | | | | 0 S/A | 1 SY |
| paquet | 1 | x | 0 | 0 | 0 |
| bloc blanc | 0 | x | 1 | 0 | 1 |
| circuit | x | 0 | 2 | 1 | 0 |
| sync. trame | x | 1 | 3 | 1 | 1 |

Dans le tableau I, une croix "x" peut être un "1" ou "0". Ainsi, un bloc blanc est transféré en sortie lorsqu'à un instant de sélection "ē" = j d'un multiplex sortant Sj, la file FSj est vide et S/A est à l'état "0", tandis qu'un bloc de synchronisation de trame est transféré vers le multiplex sortant Sj lorsque la mémoire MCL1 délivre des bits S/A = "1" et ST = "1" suite à une adresse de lecture AITS = "j".

En se référant maintenant à la Fig. 6, le circuit de gestion de mémoire tampon et d'adressage en écriture CAE comprend essentiellement une mémoire de libération de cellule MLC et une mémoire d'adresse de cellule disponible MAD. Les mémoires MLC et MAD comprennent respectivement 1024 cellules à 4 bits et 1024 cellules à 10 bits qui sont respectivement assignées à la surveillance des 1024 sous-cellules d'octets de la sous-mémoire tampon MT0 et, plus généralement, aux 1024 cellules de 16 sous-cellules dans la mémoire MT, soit 1024 cellules de bloc de données.

Pour chaque cellule de bloc de mémoire tampon, la cellule respective dans la mémoire MLC mémorise le nombre de fois mis à jour que doit être lu un bloc de donnée écrit dans la cellule de mémoire tampon. Initialement, lorsque le bloc de donnée est écrit, la cellule de la mémoire MLC enregistre le nombre de multiplex sortants vers lesquels le bloc doit être transmis, puis à chaque lecture de ce bloc, le nombre enregistré est décrémenté d'une unité jusqu'à atteindre zéro afin de libérer la cellule de mémoire tampon pour l'écriture d'un autre bloc, via la mémoire MAD, comme on le verra dans la suite.

Comme cela apparaît à la Fig. 6, la mémoire MLC est associée d'une part, à un sommateur-codeur SOM et à un multiplexeur de nombres MNB pour enregistrer initialement les nombres de multiplex sortant associées aux blocs écrits, d'autre part à un circuit de décrémentation DEC et à un circuit de test à zéro TZ pour lesdits nombres de multiplex afin de modifier lesdits nombres. La mémoire MLC est également associée à d'autres multiplexeurs et portes logiques pour adressages adéquats en écriture et lecture en fonction des instants d'écriture et de lecture des cellules de mémoire tampon notamment.

Les premières entrées du multiplexeur MNB reçoivent les nombres de multiplex sortants nbms à 4 bits associés aux blocs synchrones à écrire et transmis par la mémoire de commande en écriture MCE (Fig. 2). Quatre secondes entrées du multiplexeur MNB sont reliées aux sorties du sommateur-codeur SOM ayant seize entrées reliées respectivement aux sorties des portes d'adressage d'écriture de file PA0 à PA15. L'entrée de sélection du multiplexeur de nombre MNB reçoit les bits s/a transmis par la mémoire MCE. Les quatre sorties du multiplexeur MNB sont reliées aux quatre entrées de donnée de la mémoire de libération MLC, à travers des premières entrées d'un multiplexeur MD qui sont sélectionnées pendant des premières demi-périodes d'octet H/2. Lorsqu'un bloc synchrone est à écrire en mémoire tampon, le nombre nbms des multiplex sortants vers lesquels le bloc synchrone est à transmettre, est sélectionné dans le multiplexeur MNB par s/a = "1" et écrit dans la mémoire MLC. Lorsqu'un bloc asynchrone est à écrire en mémoire tampon, le nombre nbma des multiplex sortants vers lesquels le bloc asynchrone est à transmettre, est déduit dans le sommateur-codeur SOM, de la somme des bits "1" fournis aux sorties de portes PA0 à PA15 adressant en écriture les files FS0 à FS15 associées auxdits multiplex sortants. Le nombre nbma est sélectionné dans le multiplexeur MNB par s/a = "0" et est écrit dans la mémoire MLC.

Pour écrire un tel nombre de multiplex sortants, nbms ou nbma, le multiplexeur d'adresses d'écriture et de lecture MAEL reçoit à des premières entrées, une adresse d'écriture de cellule de bloc ade à 10 bits délivrés par des sorties ACS + ALS de la mémoire MAD et correspondant à une cellule de bloc inoccupée dans la mémoire tampon MT dans laquelle est à écrire le bloc de données. Un tel adressage en écriture est effectué pendant une première demi-période d'octet, les multiplexeurs MD et MAEL, tout comme deux autres multiplexeurs MBE et MAE dans le circuit CAE, ayant des entrées de sélection recevant le signal d'horloge d'octet H fourni par la base de temps BT.

L'écriture précédente est autorisée grâce à des moyens de validation d'écriture initiale comprenant la porte OU à quatre entrées Ps, une porte OU à seize entrées Pa, et un multiplexeur MXsa. Les entrées de la porte OU Ps reçoivent les nombres à 4 bits lus dans la mémoire de commande en écriture MCE, et applique un "1" à une première entrée du multiplexeur MXsa lorsque le nombre de multiplex sortants nbms pour bloc synchrone est au moins égal à "1". Les entrées de la porte OU Pa sont reliées respectivement aux sorties des portes PA0 à PA15 (Fig. 3) et par suite, applique un "1" à une seconde entrée du multiplexeur MXsa lorsqu'au moins l'une des portes PA0 à PA15 adresse en écriture une file d'attente et donc lorsque le nombre de multiplex sortants nbma pour bloc asynchrone lu dans la mémoire de traduction MTR est au moins égal à 1. Les première et seconde entrées du multiplexeur MXsa sont sélectionnées par les états des bits s/a, "1" et "0", respectivement. La sortie du multiplexeur MXsa est reliée à une première entrée de la porte OU PVE dont la sortie est reliée à une entrée de validation en écriture de la mémoire MLC. Ainsi, les écritures des nombres nbms et nbma au moins égaux à 1 lus dans les mémoires MCE et MTR sont validées dans la mémoire MLC, respectivement lorsque s/a = "1" et s/a = "0".

En lecture, la mémoire de libération MLC est adressée par l'adresse de lecture ADL à 10 bits parallèles transmise par la sortie du multiplexeur MALI (Fig. 3) et appliquée à des premières entrées du multiplexeur MAEL. Cette adresse de lecture ADL de cellule de bloc de mémoire tampon est égale à l'adresse d'écriture du même bloc ade et est transmise chaque fois que le bloc écrit auparavant doit être lu, une telle lecture étant réitérée en fonction du nombre de multiplex sortants correspondant nbms ou nbma mis à jour.

Le nombre de multiplex sortants nbm lu dans la mémoire MLC est d'abord décrémenté d'une unité dans le circuit de décrémentation DEC. Le circuit DEC a quatre entrées reliées aux sorties de donnée de la mémoire MLC, quatre sorties de nombre reliées aux entrées d'une porte OU OAL et du circuit de test TZ, et une sortie de signe reliée à une entrée de remise à zéro du circuit TZ. Quatre sorties du circuit TZ sont reliées aux entrées de donnée de la mémoire MLC à travers des secondes entrées du multiplexeur MD.

Suite à la décrémentation du nombre nbm lu dans la mémoire MLC, le circuit DEC transmet en code binaire le nombre (nbm-1) avec un bit de signe SIG. Dans le circuit de test TZ, le bit de signe SIG égal à "1" ou à "0" lorsque (nbm-1) est positif ou négatif, est comparé à "0". Si SIG = "1", le nombre (nbm-1) supérieur ou égal à zéro n'est pas modifié et est écrit dans la même cellule de la mémoire MLC ayant pour adresse ADL; une telle écriture est effectuée au cas où le bloc écrit en mémoire tampon doit être lu à nouveau, ou bien est lu pour la dernière fois; cette écriture est autorisée à travers la porte OU ESA (Fig. 3) reliée à la seconde entrée de la porte OU PVE, en réponse à une lecture de bloc synchrone pour laquelle S/A = "1" ou à une lecture de bloc asynchrone pour laquelle la file d'attente correspondante n'est pas vide. Il est à noter que l'adresse ADL sert également d'adresse d'écriture du nombre (nbm-1). Si SIG = "0", le nombre (nbm-1) est égal à -1, et le circuit de test réécrit dans la mémoire MLC le nombre nbm = 0; ceci signifie que le nombre lu nbm était déjà égal à zéro et que par suite, aucun bloc déjà écrit n'est à lire ultérieurement dans la cellule de mémoire tampon d'adresse ADL.

La mémoire d'adresse de cellule disponible MAD constitue un circuit pour mémoriser des états de cellule de bloc de la mémoire tampon MT et pour établir des adresses de cellules libres ADL, tel que décrit dans la demande de brevet français FR-A-2617302 déposée le 26 juin 1987 (ou la EP-A-0298793). Selon cette demande de brevet, la mémoire MAD comprend essentiellement une matrice de 1024 cellules d'état à un bit, et un circuit de codage d'adresse de cellule de mémoire tampon. Les cellules d'état dans la matrice sont respectivement assignées aux cellules de bloc de la mémoire tampon MT et mémorisent chacune un bit d'état de disponibilité de la cellule respective de la mémoire tampon. Le bit d'état est à l'état haut "1" lorsque la cellule de mémoire tampon est libre et donc prête à enregistrer un bloc de données d'un multiplex entrant. Le bit d'état est à l'état bas "0" lorsque la cellule de la mémoire tampon est occupée par un bloc de données écrit qui doit être lu une ou plusieurs fois en fonction du nombre respectif mis à jour, nbms ou nbma, mémorisé dans la mémoire MLC. Le circuit de codage dans la mémoire MAD est reliée aux sorties de toutes les cellules de la matrice afin de sélectionner l'une des cellules de la matrice ayant un bit d'état "1", selon un ordre de priorité de cellule prédéterminé, et ainsi établir en permanence l'adresse d'une cellule de matrice libre sélectionnée égale à l'adresse d'écriture ade de la cellule de bloc respective de la mémoire tampon.

Les bits d'état sont transmis à une entrée de donnée DE de toutes les cellules de matrice dans la mémoire MAD par une sortie inverseuse du multiplexeur MBE. Les cellules de matrice sont adressées en écriture par le multiplexeur MAE dont les sorties sont reliées à 10 entrées d'adresse d'écriture ACS + ALS d'un double décodeur de colonne et de ligne de la matrice inclus dans la mémoire MAD. Chaque écriture est autorisée par un bit "1" appliqué à une entrée de validation d'écriture ECR de la mémoire MAD par une porte OU à deux entrées PAE. Une première entrée de la porte OU PAE ainsi qu'une première entrée du multiplexeur MBE sont reliés à la sortie du multiplexeur MXsa. Une seconde entrée de la porte PAE est reliée à une sortie de la porte ET EAL ayant une entrée inverseuse qui est reliée à la sortie de la porte OU OAL et à une seconde entrée du multiplexeur MBE, et ayant une entrée directe qui est reliée à la sortie de la porte OU ESA (Fig. 3). Comme déjà dit, les dix premières entrées et les dix secondes entrées du multiplexeur d'adresse d'écriture MAE sont reliées respectivement aux sorties ACS + ALS de la mémoire MAD et aux sorties du multiplexeur MALI (Fig.3).

Pendant une première demi-période d'octet H/2, lorsqu'un bloc de donnée est à écrire dans une cellule libre de mémoire tampon MT ayant l'adresse ade fournie par les sorties ACS + ALS de la mémoire MAD, quel que soit le nombre respectif, nbms ou nbma, écrit dans la mémoire MLC et donc l'état de sortie des portes OAL et EAL, les premières entrées du multiplexeur MBE et de la porte d'autorisation d'écriture PAE reçoivent un bit "1" à travers le multiplexeur MXsa, si le nombre nbms pour bloc synchrone lu dans la mémoire MCE est au moins égal à 1, ou si au moins l'un des seize bits représentant le nombre nbma pour bloc asynchrone lu dans la mémoire MTR est à l'état "1". L'adresse ade adresse alors la cellule respective dans la matrice de la mémoire MAD à travers le multiplexeur MAE pour écrire le nouveau bit d'état "O" dans cette cellule, via la première entrée du multiplexeur MBE. Suite à cette écriture, les sorties ACS + ACL délivrent une nouvelle adresse de cellule libre pour un prochain bloc de données à écrire.

Puis tant que le nombre respectif nbms ou nbma qui est décrémenté à chaque lecture du bloc de données n'atteint pas zéro, la porte EAL demeure fermée, et aucun changement du bit d'état dans la cellule de matrice respective de la mémoire MAD n'intervient. En effet, la porte PAE demeure fermée, bien qu'une adresse ADL de cette cellule soit appliquée aux secondes entrées du multiplexeur MAE.

Pendant une seconde période d'horloge d'octet H/2, lorsque le nombre respectif nbms ou nbma lu et décrémenté dans le circuit DEC atteint zéro, suite à la dernière lecture du bloc de données, la sortie de la porte OAL passe à l'état "0", ce qui ouvre la porte EAL et applique un bit d'état "1" à l'entrée DE de la mémoire MAD à travers la seconde entrée du multiplexeur MBE. Ce bit d'état "1" est écrit dans la cellule respective de la matrice adressée par l'adresse ADL qui est transmise par les secondes entrées du multiplexeur MAE. Cette écriture est validée par l'entrée directe de la porte EAL à l'état "1" et donc par la seconde entrée de la porte PAE à l'état "1", lorsque S/A = "1" pour un bloc synchrone, ou lorsque la file d'attente respective FS0 à FS15 n'est pas vide, ce qui est traduit par FNV = "1". Le bit d'état "1" indiquant l'inoccupation de la cellule ayant l'adresse ADL et venant d'être libérée ne sera pas modifié jusqu'à la sélection de celle-ci par le circuit de codage dans la mémoire MAD pour l'écriture d'un autre bloc de données dans la mémoire tampon MT.

Bien que la description précédente se réfère à un système de commutation hybride commutant des blocs synchrones et asynchrones, un tel système, ou un système analogue simplifié, peut être utilisé uniquement pour commuter des blocs synchrones, ou bien des blocs asynchrones, selon que les multiplex convoient des blocs synchrones ou des blocs asynchrones seulement.

Pour un système de commutation de blocs synchrones uniquement, la mémoire MTR et les files d'attente FS0 à FS15 ainsi que les circuits associées PA0 à PA15, TR, MFS, MGS et les circuits ayant des entrées sélectionnées par les bits s/a et S/A peuvent être supprimés. Sachant qu'en moyenne, la durée de mémorisation d'un bloc synchrone entre son instant d'écriture initialisé par son rang e + DS et son dernier instant de lecture commandé par l'adresse AITS de l'intervalle de temps sortant correspondant est inférieur à une demi-période de trame, la capacité de la mémoire tampon MT peut être réduite de moitié, soit à (64/2) x 16 = 512 cellules de bloc.

Pour un système de commutation de blocs asynchrones uniquement, la mémoire MCE et la mémoire MCL2 ainsi que le multiplexeur associé MA2 et les circuits ayant des entrées sélectionnées par les bits s/a et S/A peuvent être supprimés. Pour des longueurs de files d'attente d'adresse ayant une capacité de 64 adresses à 10 bits, ce nombre pouvant être inférieur au nombre de blocs par trame dans un multiplex, un adressage maximum de (64 x 16) = 1024 blocs asynchrones à destination des 16 multiplex sortants S0 à S15 pendant une trame offre une probabilité très faible. En pratique, la capacité de la mémoire tampon peut être alors réduite d'un facteur au moins égal à 4, soit d'une capacité de (64/4) x 16 = 256 cellules de bloc, tout en conservant une capacité de 64 adresses à 10 bits par file d'attente.

Bien entendu, ces différentes réductions de capacité de mémoire tampon sont envisagées grâce au processus de libération des cellules de mémoire mis en oeuvre par le circuit de gestion de mémoire tampon et d'adressage en écriture CAE (Fig. 6).

Enfin selon d'autres variantes, lorsque le système de commutation ne commute des blocs de données synchrones et/ou asynchrones uniquement pour des communications point-à-point, correspondant à des nombres nbms et nbma toujours égal à 1, la mémoire de libération MLC et les circuits associés Ps, Pa, SOM, MNB, MD, PVE, MAEL, DEC, TZ, OAL et EAL sont supprimés.

**Revendications**

1. Système de commutation de blocs de données entre plusieurs multiplex entrants (E0 à E15) et plusieurs multiplex sortants (S0 à S15), ledit système comprenant des moyens d'entrée (CE0 à CE15, MRE) pour détecter des blocs de données dans les multiplex entrants et multiplexer les blocs détectés, des moyens tampons (MT) comprenant des cellules de bloc pour mémoriser les blocs multiplexés, des moyens d'adressage en écriture (MCE, MTR, CAE) pour produire des adresses (ade) de cellules de bloc afin d'écrire les blocs multiplexés dans des cellules de bloc adressées en écriture, des moyens d'adressage en lecture (CAL) pour mémoriser les adresses (ade) des cellules de bloc adressées en écriture et les ordonner en dépendance des multiplex sortants (S0 à S15) auxquels sont destinés les blocs écrits afin de lire et multiplexés les blocs écrits, et des moyens (CTR0 à CTR15, MRS, p/s0 à p/s15) pour démultiplexer les blocs lus et les transmettre dans les multiplex sortants destinataires (S0 à S15), caractérisé en ce que

les moyens d'adressage en écriture comprennent des moyens (MAD) ayant des cellules d'état mémorisant les états de disponibilité, libres ("1") et occupés ("0"), des cellules de bloc des moyens tampons (MT) respectivement pour établir une adresse (ade) de l'une des cellules de bloc des moyens tampons (MT) en fonction d'une sélection parmi les cellules d'état mémorisant des états libres ("1") en réponse à un bloc de données détecté, de manière à écrire le bloc détecté dans la cellule de bloc de moyens tampons ayant l'adresse établie et puis à mémoriser l'état occupé dans la cellule d'état correspondante, un état libre d'une cellule de bloc de moyens tampons étant mémorisé dans la cellule d'état correspondante en réponse à l'adresse (ADL) de la cellule de bloc de moyens tampons fournie par les moyens d'adressage en lecture (CAL) lorsque ceux-ci lisent le bloc de données dans ladite cellule de moyens tampons.

2. Système conforme à la revendication 1, à travers lequel un bloc de données dans un multiplex entrant (Ej) est transmissible dans plusieurs multiplex sortants destinataires (S0 à S15), caractérisé en ce que les moyens d'adressage en écriture (MCE, MTR, CAE) comprennent des moyens (MLC) pour indiquer les nombres (nbm) de multiplex sortants vers lesquels doivent être encore transmis des blocs de données mémorisés dans des cellules des moyens tampons (MT), respectivement, ledit nombre (nbm) relatif à une cellule mémorisant un bloc étant égal à un nombre prédéterminé (nbms, nbma) de multiplex sortants destinataires du bloc lorsque le bloc est écrit dans la cellule et étant décrémenté d'une unité en réponse à chaque adresse de lecture (ADL) de ladite cellule fournie par les moyens d'adressage en lecture (CAL), la libération de ladite cellule ayant mémorisée ledit bloc étant signalée par les moyens pour indiquer (MLC) aux moyens pour établir une adresse (MAD) dès que ledit nombre (nbm) atteint zéro.

3. Système de commutation de blocs de donnée synchrones (mode-circuit) et de blocs de données asynchrones (mode-paquet) entre plusieurs multiplex entrants (E0 à E15) et plusieurs multiplex sortants (S0 à S15), chacun desdits multiplex entrants et sortants incluant des trames, chaque trame étant constituée par un premier intervalle de temps (IT0) occupé par un bloc de synchronisation et d'intervalles de temps (IT1 à IT68) occupés sporadiquement par des blocs de données, ledit système comprenant,

des moyens d'entrée (CE0 à CE15) pour détecter les blocs de données dans les trames des multiplex entrants (E0 à E15, MRE) et multiplexer les blocs détectés,

des premiers moyens tampons (MT) pour mémoriser les blocs multiplexés dans des premières cellules de bloc,

des seconds moyens tampons (MT) pour mémoriser les blocs multiplexés dans des secondes cellules de bloc,

des moyens de sortie (CTR0 à CTR15, MRS, p/s0 à p/s15) pour démultiplexer des blocs synchrones et asynchrones mémorisés et les transmettre en fonction de leurs destinations aux multiplex sortants (S0 à S15), de manière à constituer les trames dans les multiplex sortants,

des moyens d'écriture (BT, MCE, MTR) pour produire des adresses de cellules de bloc (ade) afin d'écrire chacun des blocs détectés multiplexés dans des première et seconde cellules,

des premiers moyens de lecture (BT, MCL1, MCL2) recevant les adresses des premières cellules dans lesquelles sont écrits des blocs synchrones pour lire chacun des blocs synchrones mémorisés, par correspondance entre l'adresse (ade) de la première cellule où est écrit le bloc synchrone et au moins un numéro d'intervalle de multiplex sortant (AITS) à occuper par le bloc synchrone, et

plusieurs seconds moyens de lecture (BT, FS0 à FS15) respectivement assignés aux multiplex sortants (S0 à S15) et adressés par les moyens d'écriture, et recevant les adresses des secondes cellules dans lesquelles sont écrits des blocs asynchrones pour lire chacun des blocs asynchrones mémorisés, par correspondance entre l'adresse (ade) de la seconde cellule où est écrit le bloc asynchrone et le numéro du multiplex sortant destinataire ($\overline{e}$),

caractérisé en ce que

les premiers et seconds moyens tampons comprennent une unique mémoire tampon (MT) ayant des cellules de bloc susceptibles de mémoriser indifféremment des blocs synchrones et des blocs asynchrones détectés et multiplexés, et

les moyens d'écriture comprennent des moyens (MAD, PAE, MBE, MAE) ayant des cellules d'état mémorisant les états de disponibilité, libres ("1") et occupés ("0"), des cellules de la mémoire tampon (MT) respectivement pour établir une adresse d'écriture (ade) de l'une des cellules de la mémoire tampon (MT) en fonction d'une sélection parmi les cellules d'état mémorisant des états libres ("1") en réponse à un bloc de données détecté, de manière à écrire le bloc détecté dans la cellule de mémoire tampon ayant l'adresse établie et puis à mémoriser l'état occupé dans la cellule d'état correspondante,

un état libre d'une cellule de mémoire tampon étant mémorisé dans la cellule d'état correspondante en réponse à l'adresse (ADL) de la cellule de mémoire tampon fournie par l'un des premiers et seconds moyens de lecture (BT, MCL1, MCL2; BT, FS0 à FS15) lorsque ceux-ci lisent le bloc de données dans ladite cellule de mémoire tampon.

4. Système conforme à la revendication 3, caractérisé en ce que les moyens pour établir (MAD, PAE, MBE, MAE) comprennent

un circuit (MAD) ayant des cellules à 1 bit respectivement assignées aux cellules de bloc de la mémoire tampon (MT) pour mémoriser les états de disponibilité, libres ("1") et occupés ("0"), des cellules de la mémoire tampon (MT) et pour établir en permanence une adresse de cellule libre (ade) dans la mémoire tampon en fonction des états libres,

des moyens (premières entrées de PAE, MBE, MAE) pour écrire l'état occupé ("0") dans la cellule à 1 bit correspondant à l'adresse de cellule de bloc libre sélectionnée (ade) dès qu'un bloc de données détecté est à écrire dans la mémoire tampon (MT), ladite adresse de cellule libre sélectionnée (ade) étant mémorisée dans les premiers moyens de lecture (BT, MCL1, MCL2) lorsque le bloc de données à écrire est un bloc synchrone, et dans les seconds moyens de lecture (BT, FS0 à FS15) assignés aux multiplex sortants destinataires du bloc et adressés par les moyens d'écriture lorsque le bloc de données est un bloc asynchrone, et

des moyens (secondes entrées de PAE, MBE, MAE) pour écrire l'état libre ("1") dans une cellule à 1 bit correspondant à une adresse de cellule de bloc (ADL) où est lu pour la dernière fois un bloc de données et qui est fournie par les premiers moyens de lecture (BT, MCL1, MCL2) lorsque le bloc de données lu est un bloc synchrone, et par les seconds moyens de lecture (BT, FS0 à FS15) lorsque le bloc de donnée lu est un bloc asynchrone.

5. Système conforme à la revendication 3 ou 4, caractérisé en ce que les premiers moyens de lecture comprennent

une première mémoire (MCL1) mémorisant les numéros des intervalles de temps (AITE) occupés par les blocs de données détectés dans les multiplex entrants (E0 à E15) afin de fournir, pendant une période de trame des blocs de données multiplexés sortant de la mémoire tampon (MT), lesdits numéros des intervalles de temps (AITE) ordonnés en fonction des numéros des intervalles de temps (AITS) dans les multiplex sortants (S0 à S15) à occuper respectivement par les blocs de données lus, et

une seconde mémoire (MCL2) dans laquelle sont écrites les adresses des cellules (ade) de la mémoire tampon (MT) où sont écrits des blocs synchrones en fonction de numéros des intervalles de temps de ces blocs (e + DS) dans les multiplex entrants (E0 à E15) fournis par les moyens d'entrée (CE0 à CE15, MRE) , et dans laquelle sont lues les adresses des cellules en fonction des numéros des intervalles de temps ordonnées (AITE) fournis par la première mémoire (MCL1).

6. Système conforme à l'une quelconque des revendications 3 à 5, à travers lequel un bloc de données dans un multiplex entrant (Ej) est susceptible d'être transmis dans plusieurs multiplex sortants destinataires (S0 à S15), caractérisé en ce que les moyens d'écriture comprennent des moyens (MLC, MD, PVE, MAEL, DEC, TZ, OAL, EAL) pour mettre à jour des nombres (nbm) de multiplex sortants vers lesquels doivent être encore transmis des blocs de données mémorisés dans la mémoire tampon (MT) respectivement, ledit nombre (nbm) relatif à une cellule de mémoire tampon mémorisant un bloc étant égal à un nombre prédéterminé (nbms, nbma) de multiplex sortants destinataires du bloc lorsque le bloc est écrit dans ladite cellule, et étant décrémenté d'une unité en réponse à chaque adresse (ADL) de lecture de ladite cellule fournie par les premiers moyens de lecture (BT, MCL1, MCL2) lorsque le bloc est un bloc synchrone, et par les seconds moyens de lecture (BT, FS0 à FS15) lorsque le bloc est un bloc asynchrone, la libération de ladite cellule ayant mémorisé ledit bloc étant signalée par les moyens pour mettre à jour aux moyens pour établir une adresse d'écriture (MAD, PAE, MBE, MAE) dès que ledit nombre (nbm) atteint zéro.

7. Système conforme à la revendication 6, caractérisé en ce que les moyens pour mettre à jour (MLC, MD, PVE, MAEL, DEC, TZ, OAL, EAL) comprennent une mémoire de nombre (MLC) ayant des cellules de nombre respectivement assignées aux cellules de bloc de la mémoire tampon (MT) pour mémoriser lesdits nombres mis a jour (nbm),

des moyens (premières entrées de MD, PVE, MAEL) pour écrire le nombre prédéterminé de multiplex destinataires (nbms, nbma) relatif à une cellule libre sélectionnée de la mémoire tampon (MT) lorsqu'un bloc de donnée est écrit dans ladite cellule,

des moyens (secondes entrées de MD, PVE, MAEL) pour lire le nombre mis à jour (nbm) relatif à une cellule de mémoire tampon en réponse à l'adresse (ADL) de cette cellule transmise par les premiers moyens de lecture (BT, MCL1, MCL2) lorsqu'un bloc synchrone est lu dans ladite cellule et par les seconds moyens de lecture (BT, FS0 à FS15) lorsqu'un bloc asynchrone est lu dans ladite cellule,

des moyens (DEC, TZ) pour décrémenter ledit nombre mis à jour lu (nbm) d'une unité en réponse à l'adresse de ladite cellule transmise, ledit nombre étant décrémenté jusqu'à atteindre zéro suite à un nombre de décrémentation égal au nombre prédéterminé respectif (nbms, nbma),

des moyens (secondes entrées de MD, PVE, MAEL) pour écrire ledit nombre mis à jour lu après chacune des décrémentations dans la cellule de nombre assignée à ladite cellule de mémoire tampon, et

des moyens (OAL, EAL) reliés aux moyens pour décrémenter (DEC, TZ) pour signaler aux moyens pour établir une adresse d'écriture (MAD, PAE, MBE, MAE) la nullité du nombre mis à jour afin de libérer ladite cellule de mémoire tampon dans laquelle ledit bloc de données a été lu un nombre de fois égal au nombre prédéterminé respectif (nbms, nbma).

8.  Système conforme à l'une quelconque des revendications 3 à 7, caractérisé en ce que le nombre (64 x 16) de cellules de bloc dans la mémoire de tampon (MT) est inférieur au produit du nombre (69) d'intervalles de temps dans une trame de multiplex par le nombre (16) de multiplex entrants ou sortants.

**Claims**

1.  System for switching data blocks between several incoming multiplex ways (E0 to E15) and several outgoing multiplex ways (S0 to S15), said system comprising input means (CE0 to CE15, MRE) for detecting data blocks in the incoming multiplex ways and for multiplexing the detected blocks, buffer means (MT) comprising block cells for memorizing the multiplexed blocks, write addressing means (MCE, MTR, CAE) for producing addresses (ade) of block cells thereby writing the multiplexed blocks in write addressed block cells, read addressing means (CAL) for memorizing the addresses (ade) of the write addressed block cells and arranging them dependent on outgoing multiplex ways (S0 to S15) for which the written blocks are designed thereby reading and multiplexing the written blocks, and means (CTR0 to CRT15, MRS, p/s0 to p/s15) for demultiplexing the read blocks and transmitting them in the addressee outgoing multiplex ways (S0 to S15), characterized in that

    the write addressing means comprise means (MAD) having condition cells memorizing the free ("1") and busy ("0") availability conditions of the block cells in the buffer means (MT) respectively for deriving an address (ade) of one of the block cells in the buffer means (MT) contingent on a selection among the condition cells memorizing the free conditions ("1") responsive to any data block being detected, thereby writting the detected block in the buffer means block cell having the derived address, and then memorizing the occupied condition in the corresponding condition cell, a free condition of a buffer means block cell being memorized in the corresponding condition cell in response to the address (ADL) of the buffer means block cell supplied by the read addressing means (CAL) when the latter read the data block in said buffer means cell.

2.  System according to claim 1, through which a data block in an incoming multiplex way (Ej) is transmissible to several addressee outgoing multiplex ways (S0 to S15), characterized in that the write addressing means (MCE, MTR, CAE) comprise means (MLC) for indicating the numbers (nbm) of outgoing multiplex ways to which data blocks memorized in buffer means cells (MT) are still to be transmitted, respectively, said number (nbm) relating to a cell memorizing a block being equal to a predetermined number (nbms, nbma) of addressee outgoing multiplex ways for the block when the block is written in the cell, and being decremented by one unity in response to each read address (ADL) of said cell supplied from the read addressing means (CAL), the release of said cell having memorized said block being signalled by the indicating means (MLC) to address deriving means (MAD) as soon as said number (nbm) reaches zero.

3.  System for switching synchronous data blocks (circuit-mode) and asynchronous data blocks (packet-mode) between plural incoming multiplex ways (E0 to E15) and plural outgoing multiplex ways (S0 to S15), each of said incoming and outgoing multiplex ways including frames, each frame consisting of a first time interval (IT0) occupied by a synchronization block and time intervals (IT1 to IT68) occupied sporadically by data blocks, said system comprising

    input means (CE0 to CE15) for detecting the data blocks in the frames of the incoming multiplex ways (E0 to E15, MRE) and multiplexing the detected blocks,

    first buffer means (MT) for memorizing the multiplexed blocks in first block cells,

    second buffer means (MT) for memorizing the multiplexed blocks in second block cells,

    output means (CTR0 to CTR15, MSR, p/s0 to p/s15) for demultiplexing memorized synchronous and asynchronous blocks and transmitting them contingent on their destinations to the outgoing multiplex ways (S0 to S15) thereby forming the frames in the outgoing multiplex ways,

    write means (BT, MCE, MTR) for producing block cell addresses (ade) thereby writing each of the detected and multiplexed blocks in first and second cells,

16

first read means (BT, MCL1, MCL2) receiving the addresses of the first cells in which are written synchronous blocks for reading each of the memorized synchronous blocks, by correspondence between the address (ade) of the first cell in which the synchronous block is written and at least an outgoing multiplex way interval number (AITS) to be occupied by the synchronous block, and

several second read means (BT, FS0 to FS15) respectively assigned to the outgoing multiplex ways (S0 to S15) and addressed by the write means, and receiving the addresses of second cells in which are written asynchronous blocks for reading each of the memorized asynchronous blocks by correspondence between the address (ade) of the second cell in which the asynchronous block is written and the number of addressee outgoing multiplex way $(\overline{e})$,

characterized in that

the first and second buffer means comprise a single buffer memory (MT) having block cells capable of memorizing indifferently synchronous blocks and asynchronous blocks detected and multiplexed, and

the write means comprise means (MAD, PAE, MBE, MAE) having condition cells memorizing the free ("1") and busy ("0") availability conditions of the cells in the buffer memory (MT) respectively for deriving a write address (ade) of one of the buffer memory (MT) cells contingent on a selection among the condition cells memorizing free states ("1") responsive to any detected data block, thereby writing the detected block in the buffer memory cell having the derived address and then memorizing the occupied condition in the corresponding condition cell,

a free condition of a buffer memory cell being memorized in the corresponding condition cell in response to the address (ADL) of the buffer memory cell supplied by one of the first and second read means (BT, MCL1, MCL2; BT, FS0 to FS15) when the latter read the data block in said buffer memory cell.

4. System according to claim 3, characterized in that the deriving means (MAD, PAE, MBE, MAE) comprise

a circuit (MAD) having 1-bit cells respectively assigned to the block cells of the buffer memory (MT) for memorizing the free ("1") and busy ("0") availability conditions of the buffer memory cells (MT) and for permanently deriving an address of free cell (ade) in the buffer memory contingent on the free conditions,

means (first inputs of PAE, MBE, MAE) for writing the busy condition ("0") in the 1-bit cell corresponding to the selected free block cell address (ade) as soon as a detected data block is to be written into the buffer memory (MT), said selected free cell address (ade) being memorized in the first read means (BT, MCL1, MCL2) when the data block to be written is a synchronous block, and in the second read means (BT, FS0 to FS15) assigned to addressee outgoing multiplex ways of the block and addressed by the write means when the data block is an asynchronous block, and

means (second inputs of PAE, MBE, MAE) for writing the free condition ("1") in a 1-bit cell corresponding to an address of block cell (ADL) where a data block is read for the last time and which is supplied by the first read means (BT, MCL1, MCL2) when the read data block is a synchronous block, and by the second read means (BT, FS0 to FS15) when the read data block is an asynchronous block.

5. System according to claim 3 or 4, characterized in that the first read means comprise

a first memory (MCL1) memorizing numbers of time intervals (AITE) occupied by the detected data blocks in the incoming multiplex ways (E0 to E15) thereby providing, during a frame period of outgoing multiplexed data blocks from the buffer memory (MT), said time interval numbers (AITE) arranged contingent on numbers of time intervals (AITS) in the outgoing multiplex ways (S0 to S15) to be occupied respectively by the read data blocks, and

a second memory (MCL2) in which are written the addresses (ade) of the buffer memory (MT) cells in which are written synchronous blocks contingent on numbers of time intervals of these blocks (e + DS) in the incoming multiplex ways (E0 to E15) provided by the input means (CE0 to CE15, MRE), and in which are read the cell addresses contingent on the numbers (AITE) of the arranged time intervals provided by the first memory (MCL1).

6. System according to any one of claims 3 to 5 through which a data block in an incoming multiplex way (Ej) is capable of being transmitted in several addressee outgoing multiplex ways (S0 to S15), characterized in that the write means comprise means (MLC, MD, PVE, MAEL, DEC, TZ, OAL, EAL) for updating numbers (nbm) of outgoing multiplex ways to which data blocks memorized in the buffer memory (MT) are still to be transmitted, respectively, said number (nbm) relating to a buffer memory cell memorizing a block being equal to a predetermined number (nbms, nbma) of addressee outgoing multiplex ways of the block when the block is written in said cell, and being decremented by one unity in response to each read address (ADL) of said cell supplied from the first read means (BT, MCL1, MCL2) when the block is a synchronous block, and from the second read means (BT, FS0 to FS15) when the block is an asynchronous block, the release of said cell having memorized said block being signalled by the updating means to the write address deriving means (MAD, PAE, MBE, MAE) as soon as said number (nbm) reaches zero.

7. System according to claim 6, characterized in that the updating means (MLC, MD, PVE, MAEL, DEC, TZ, OAL, EAL) comprise a number memory (MLC) having number cells respectively assigned to the block cells of the buffer memory (MT) for memorizing said updated numbers (nbm),

means (first inputs of MD, PVE, MAEL) for writing the predetermined addressee multiplex way number (nbms, nbma) relating to a selected free cell in the buffer memory (MT) while a data block is written in said cell,

means (second inputs of MD, PVE, MAEL) for reading the updated number (nbm) relating to a buffer memory cell in response to the address (ADL) of this cell transmitted by the first read means (BT, MCL1, MCL2) while a synchronous block is read in said cell and by the second read means (BT, FS0 to FS15) while an asynchronous block is read in said cell,

means (DEC, TZ) for decrementing said read updated number (nbm) by one unity in response to the transmitted address of said cell, said number being decremented until it reaches zero subsequent to a number of decrementations equal to the respective predetermined number (nbms, nbma),

means (second inputs of MD, PVE, MAEL) for writing said read updated number after each of the decrementations in the number cell assigned to said buffer memory cell, and

means (OAL, EAL) connected to the decrementing means (DEC, TZ) for indicating to the write address deriving means (MAD, PAE, MBE, MAE) the nullity of the updated number thereby releasing said buffer memory cell in which said data block has been read a number of times equal to the respective predetermined number (nbms, nbma).

8. System according to any one of claims 3 to 7, characterized in that the number (64 x 16) of block cells in the buffer memory (MT) is less than the product of the number (69) of time intervals in a multiplex way frame by the number (16) of incoming or outgoing multiplex ways.

**Patentansprüche**

1. Vermittlungssystem für Datenblöcke zwischen mehreren Multiplexeingehenden (E0 bis E15) und mehreren Multiplexausgehenden (S0 bis S15), wobei das System Eingangsmittel (CE0 bis CE15, MRE) zur Erfassung der Datenblöcke in den Multiplexeingehenden und zum Multiplexen der erfaßten Blöcke, Blockzellen zum Speichern der gemultiplexten Blöcke aufweisende Puffermittel (MT), Schreibadressierungsmittel (MCE, MTR, CAE) zum Erzeugen der Adressen (ade) von Blockzellen, um die gemultiplexten Blöcke in schreibadressierte Blockzellen zu schreiben, Leseadressierungsmittel (CAL) zum Speichern der Adressen (ade) der schreibadressierten Blockzellen und zum Ordnen von diesen abhängig von den Multiplexausgehenden (S0 bis S15), für die die geschriebenen Blöcke bestimmt sind, um die geschriebenen Blöcke zu lesen und zu multiplexen, und Mittel (CTR0 bis CTR15, MRS, p/s0 bis p/s15) umfaßt, um die gelesenen Blöcke zu demultiplexen und sie in die Multiplexausgehendenempfänger (S0 bis S15) zu übertragen, dadurch **gekennzeichnet,** daß die Schreibadressierungsmittel Mittel (MAD) umfassen, aufweisend die Verfügbarkeitszustände frei ("1") und belegt ("0") speichernde Zustandszellen, Blockzellen der Puffermittel (MT) jeweils umfassen, um eine Adresse (ade) der einen der Blockzellen der Puffermittel (MT) abhängig von einer Auswahl unter den freie Zustände ("1") in Reaktion auf einen erfaßten Datenblock speichernden Zustandszellen anzulegen derart, daß der erfaßte Block in die die angelegte Adresse aufweisende Blockzelle von Puffermitteln geschrieben wird und dann den belegten Zustand in der entsprechenden Zustandszelle gespeichert wird, wobei ein freier Zustand einer Blockzelle von Puffermitteln in der entsprechenden Zustandszelle gespeichert ist in Reaktion auf die Adresse (ADL) der Blockzelle von Puffermitteln, die durch die Leseadressierungsmittel (CAL) geliefert wird, wenn diese den Datenblock in der Zelle von Puffermitteln lesen.

2. System nach Anspruch 1, durch das ein Datenblock in einer Multiplexeingehenden (Ej) in mehrere Multiplexausgehendenempfänger (S0 bis S15) übertragbar ist, dadurch **gekennzeichnet,** daß die

EP 0 300 876 B1

Schreibadressierungsmittel (MCE, MTR, CAE) Mittel (MLC) umfassen, um die Zahlen (nbm) von Multiplexausgehenden anzuzeigen, zu denen hin die noch in den Zellen der Puffermittel (MT) jeweils gespeicherte Datenblöcke übertragen werden müssen, wobei die Zahl (nbm) in bezug auf eine einen Block speichernde Zelle gleich einer vorbestimmten Zahl (nbms, nbma) von Multiplexausgehendenempfängern des Blocks ist, wenn der Block in die Zelle geschrieben wird, und um eine Einheit in Reaktion auf jede Leseadresse (ADL) der Zelle verringert wird, die durch die Leseadressierungsmittel (CAL) geliefert wird, wobei die Freigabe der Zelle gespeichert wird, wobei der Block durch die Mittel zum Anzeigen (MLC) den Mitteln zum Anlegen einer Adresse (MAD) angezeigt wird, sobald die Zahl (nbm) Null erreicht.

3. System zum Vermitteln von synchronen Datenblöcken (Kreis-Modus) und von asynchronen Blöcken (Paket-Modus) zwischen mehreren Multiplexeingehenden (E0 bis E15) und mehreren Multiplexausgehenden (S0 bis S15), wobei jede der Multiplexeingehenden und -ausgehenden Rahmen enthalten, wobei jeder Rahmen durch ein durch einen Synchronisationsblock belegtes erstes Zeitintervall (IT0) und durch sporadisch durch Datenblöcke belegte Zeitinvervalle (IT1 bis IT68) gebildet ist, wobei das System umfaßt
   - Eingangsmittel (CE0 bis CE15) zum Erfassen der Datenblöcke in den Rahmen der Multiplexeingehenden (E0 bis E15, NRE) und zum Multiplexen der erfaßten Blöcke,
   - erste Puffermittel (MT) zum Speichern der gemultiplexten Blöcke in ersten Blockzellen,
   - zweite Puffermittel (MT) zum Speichern der gemultiplexten Blöcke in zweiten Blockzellen,
   - Ausgangsmittel (CTR0 bis CTR15, MRS, p/s0 bis p/s15) zum Demultiplexen der synchronen und asynchronen gespeicherten Blöcke und zu deren Übertragung abhängig von ihren Bestimmungen zu Multiplexausgehenden (S0 bis S15) derart, daß die Rahmen in den Multiplexausgehenden gebildet werden,
   - Schreibmittel (BT, MCE, MTR) zum Erzeugen der Adressen von Blockzellen (ade), um jeden der erfaßten gemultiplexten Blöcke in erste und zweite Zellen zu schreiben,
   - erste Lesemittel (BT, MCL1, MCL2), die die Adressen der ersten Zellen aufnehmen, in die synchrone Blöcke geschrieben sind, um jeden der gespeicherten synchronen Blöcke zu lesen, durch Entsprechung zwischen der Adresse (ade) der ersten Zelle, in die der synchrone Block geschrieben ist, und wenigstens einer Intervallzahl von Multiplexausgehenden (AITS) zum Belegen durch den synchronen Block und
   - mehrere zweite Lesemittel (BT, FS0 bis FS15), die jeweils den Multiplexausgehenden (S0 bis S15) zugeordnet sind und durch die Schreibmittel adressiert werden und die Adressen der zweiten Zellen aufnehmen, in die asynchrone Blöcke geschrieben sind, um jeweils gespeicherte asynchrone Blöcke zu lesen, durch Entsprechung zwischen der Adresse (ade) der zweiten Zelle, in die der asynchrone Block geschrieben ist, und der Nummer des Multiplexausgehendenempfängers ($\overline{e}$),
   dadurch **gekennzeichnet,** daß
   - die ersten und zweiten Puffermittel einen einzigen Pufferspeicher (MT), der Blockzellen aufweist, die geeignet sind, in gleicher Weise erfaßte und gemultiplexte synchrone Blöcke und asynchrone Blöcke zu speichern, und
   - die Schreibmittel umfassen Mittel (MAD, PAE, MBE, MAE), die Zustandszellen aufweisen, die die freien ("1") und belegten ("0") Verfügbarkeitszustände speichern, Zellen des Pufferspeichers (MT) jeweils zum Anlegen einer Schreibadresse (ade) der einen der Zellen des Pufferspeichers (MT) abhängig von einer Auswahl unter den freie Zustände ("1") in Reaktion auf einen erfaßten Datenblock speichernden Zustandszellen derart, daß der erfaßte Block in die die angelegte Adresse besitzende Pufferspeicherzelle geschrieben wird und dann der belegte Zustand in der entsprechenden Zustandszelle gespeichert wird,
   - wobei ein freier Zustand einer Pufferspeicherzelle in der entsprechenden Zustandszelle in Reaktion auf die Adresse (ADL) der Pufferspeicherzelle gespeichert wird, die durch das eine der ersten und zweiten Lesemittel (BT, MCL1, MCL2; BT, FS0 bis FS15) geliefert wird, wenn diese den Datenblock in der Pufferspeicherzelle lesen.

4. System nach Anspruch 3, dadurch **gekennzeichnet,** daß die Mittel zum Anlegen (MAD, PAE, MBE, MAE) umfassen
   - einen Kreis (MAD) aufweisend Zellen mit 1 Bit, die jeweils den Blockzellen des Pufferspeichers (MT) zugeordnet sind, um die freien ("1") und belegten ("0") Verfügbarkeitszustände der Zellen des Pufferspeichers (MT) zu speichern und um in Permanenz eine freie Zellenadresse (ade) in

19

den Pufferspeicher abhängig von den freien Zuständen anzulegen,

- Mittel (erste Eingänge von PAE, MBE, MAE) zum Schreiben des belegten Zustandes ("0") in die Zelle mit 1 Bit entsprechend der ausgewählten freien Blockzellenadresse (ade), sobald ein erfaßter Datenblock in den Pufferspeicher (MT) geschrieben werden soll, wobei die ausgewählte freie Zellenadresse (ade) in den ersten Lesemitteln (BT, MCL1, MCL2), wenn der zu schreibende Datenblock ein synchroner Block ist, und in die zweiten Lesemitteln (BT, FS0 bis FS15) gespeichert wird, die den Multiplexausgehendenempfängern des Blocks zugeordnet sind und durch die Schreibmittel adressiert werden, wenn der Datenblock ein asynchroner Block ist, und

- Mittel (zweite Eingänge von PAE, MBE, MAE) zum Schreiben des freien Zustandes ("1") in eine Zelle mit 1 Bit entsprechend einer Blockzellenadresse (ADL) zu schreiben, wo das erste Mal ein Datenblock gelesen wird, und der durch die ersten Lesemittel (BT, MCL1, MCL2) geliefert wird, wenn der gelesene Datenblock ein synchroner Block ist, und durch die zweiten Lesemittel (BT, FS0 bis FS15) gelesen wird, wenn der gelesene Datenblock ein asynchroner Block ist.

5. System nach Anspruch 3 oder 4, dadurch **gekennzeichnet,** daß die ersten Lesemittel umfassen

- einen ersten Speicher (MCL1), der die Zahlen der Zeitintervalle (AITE) speichert, die durch die erfaßten Datenblöcke in den Multiplexeingehenden (E0 bis E15) belegt sind, um während einer Rahmenperiode gemultiplexte Datenblöcke ausgehend aus dem Pufferspeicher (MT) zu liefern, wobei die Zahlen der Zeitintervalle (AITE) abhängig von den Zahlen der Zeitintervalle (AITS) in den Multiplexausgehenden (S0 bis S15) geordnet sind zum Belegen jeweils durch die Blöcke von gelesenen Daten, und

- einen zweiten Speicher (MCL2), in den die Adressen der Zellen (ade) des Pufferspeichers (MT) geschrieben werden, wo synchrone Blöcke abhängig von Zahlen der Zeitintervalle dieser Blöcke (e + DS) in den Multiplexeingehenden (E0 bis E15) geschrieben werden, die durch die Eingangsmittel (CE0 bis CE15, MRE) geliefert werden, und in dem die Adressen der Zellen abhängig von den geordneten, durch den ersten Speicher (MCL1) gelieferten Zahlen der Zeitintervalle (AITE) gelesen werden.

6. System nach einem beliebigen der Ansprüche 3 bis 5, durch das ein Datenblock in einer Multiplexeingehenden (Ej), in mehrere Multiplexausgehendenempfänger (S0 bis S15) übertragbar ist, dadurch **gekennzeichnet,** daß die Schreibmittel Mittel (MLC, MD, PVE, MAEL, DEC, TZ, OAL, EAL) umfassen, um Zahlen (nbm) von Multiplexausgehenden aufzudecken, zu denen noch jeweils im Pufferspeicher (MT) gespeicherte Datenblöcke übertragen werden müssen, wobei die Zahl (nbm) bezüglich einer einen Block speichernden Pufferspeicherzelle gleich einer vorbestimmten Zahl (nbms, nbma) von Multiplexausgehendenempfängern des Blocks ist, wenn der Block in die Zelle geschrieben wird, und um eine Einheit in Reaktion auf jede Leseadresse (ADL) der Zelle verringert wird, die durch die ersten Lesemittel (BT, MCL1, MCL2), wenn der Block ein synchroner Block ist, und durch die zweiten Lesemittel (BT, FS0 bis FS15) geliefert wird, wenn der Block ein asynchroner Block ist, wobei die Freigabe der Zelle gespeichert worden ist, wobei der Block durch die Aufdeckmittel den Mitteln zum Anlegen einer Schreibadresse (MAD, PAE, MBE, MAE) angezeigt wird, sobald die Zahl (nbm) Null erreicht.

7. System nach Anspruch 6, dadurch **gekennzeichnet,** daß die Aufdeckmittel (MLC, MD, PVE, MAEL, DEC, TZ, OAL, EAL) umfassen einen Zahlenspeicher (MLC), der Zahlenzellen besitzt, die jeweils den Blockzellen des Pufferspeichers (MT) zugeordnet sind, um die aufgedeckten Zahlen (nbm) zu speichern,

- Mittel (erste Eingänge von MD, PVE, MAEL) zum Schreiben der vorbestimmten Zahl von Multiplexempfängern (nbms, nbma) bezüglich einer ausgewählten freien Zelle des Pufferspeichers (MT), wenn ein Datenblock in die Zelle geschrieben wird,

- Mittel (zweite Eingänge von MD, PVE, MAEL) zum Lesen der aufgedeckten Zahl (nbm) bezüglich einer Pufferspeicherzelle in Reaktion auf die durch die ersten Lesemittel (BT, MCL1, MCL2) übertragene Adresse (ADL) dieser Zelle, wenn ein synchroner Block in der Zelle gelesen wird, und durch die zweiten Lesemittel (BT, FS0 bis FS15), wenn ein asynchroner Block in der Zelle gelesen wird,

- Mittel (DEC, TZ) zum Verringern der aufgedeckten gelesenen Zahl (nbm) um eine Einheit in Reaktion auf die übertragene Adresse der Zelle, wobei die Zahl verringert wird, bis sie Null erreicht, gemäß einer Verringerungszahl gleich der vorbestimmten jeweiligen Zahl (nbms, nbma),

- Mittel (zweite Eingänge von MD, PVE, MAEL) zum Schreiben der gelesenen aufgedeckten Zahl, nach jeder der Zahlenverringerungen in der Zelle, die der Pufferspeicherzelle zugeordnet ist, und
- Mittel (OAL, EAL), die mit den Mitteln zum Verringern (DEC, TZ) verbunden sind, um den Mitteln zum Anlegen einer Schreibadresse (MAD, PAE, MBE, MAE) die Nichtigkeit der aufgedeckten Zahl anzuzeigen, um die Pufferspeicherzelle freizugeben, in der der Datenblock eine Anzahl von Malen gleich der vorbestimmten entsprechenden Zahl (nbms, nbma) gelesen worden ist.

8. System nach einem beliebigen der Ansprüche 3 bis 7, dadurch **gekennzeichnet,** daß die Zahl (64 x 16) von Blockzellen im Pufferspeicher (MT) kleiner als das Produkt der Zahl (69) von Zeitintervallen in einem Multiplexrahmen mit der Zahl (16) von Multiplexeingehenden oder - ausgehenden ist.

FIG.1

TRAME DE MULTIPLEX

| IT 68 | IT0 synchro trame | IT1 bloc synchrone | IT2 bloc blanc | IT3 bloc asynchrone | IT4 | – – – – | IT68 | IT0 |

étiquette

16 octets

étiquette ≠ OF

EP 0 300 876 B1

FIG. 2

FIG.3

CIRCUIT DE COMMANDE
ET D'ADRESSAGE
EN LECTURE CAL

EP 0 300 876 B1

FIG.4

FIG.5

# FIG. 6

CIRCUIT DE GESTION DE MEMOIRE TAMPON
ET D'ADRESSAGE EN ECRITURE
CAE